(19) Europäisches Patentamt
European Patent Office
Office européen des brevets

(11) **EP 2 670 148 B1**

(12) **EUROPEAN PATENT SPECIFICATION**

(45) Date of publication and mention of the grant of the patent:
**01.03.2017 Bulletin 2017/09**

(51) Int Cl.:
*G06T 1/00* (2006.01)   *H04N 13/00* (2006.01)
*H04N 13/02* (2006.01)

(21) Application number: **11857063.9**

(22) Date of filing: **15.12.2011**

(86) International application number:
**PCT/JP2011/007029**

(87) International publication number:
**WO 2012/101719 (02.08.2012 Gazette 2012/31)**

(54) **THREE-DIMENSIONAL IMAGING DEVICE AND THREE-DIMENSIONAL IMAGING METHOD**

VORRICHTUNG FÜR DREIDIMENSIONALE ABBILDUNGEN UND VERFAHREN FÜR DREIDIMENSIONALE ABBILDUNGEN

DISPOSITIF D'IMAGERIE TRIDIMENSIONNELLE ET PROCÉDÉ D'IMAGERIE TRIDIMENSIONNELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.01.2011 JP 2011015622**

(43) Date of publication of application:
**04.12.2013 Bulletin 2013/49**

(73) Proprietor: **Panasonic Intellectual Property Management Co., Ltd.**
**Osaka-shi, Osaka 540-6207 (JP)**

(72) Inventors:
• **NGUYEN, Khang**
**Osaka-shi, Osaka 540-6207 (JP)**
• **KAWAMURA, Takashi**
**Osaka-shi, Osaka 540-6207 (JP)**

• **YASUGI, Shunsuke**
**Osaka-shi, Osaka 540-6207 (JP)**

(74) Representative: **Vigand, Philippe et al**
**Novagraaf International SA**
**Chemin de l'Echo 3**
**1213 Onex (CH)**

(56) References cited:
**EP-A1- 1 587 329     EP-A2- 2 076 048**
**WO-A1-01/09761     WO-A1-2004/071102**
**WO-A1-2005/060271     WO-A1-2010/041176**
**JP-A- 11 313 202     JP-A- 2008 141 666**
**JP-A- 2010 238 108     US-A1- 2008 240 549**

• **C. ZHOU ET AL.: 'Coded Aperture Pairs for Depth from Defocus' IEEE INTERNATIONAL CONFERENCE ON COMPUTER VISION (ICCV) 02 October 2009, pages 325 - 332, XP031672598**

EP 2 670 148 B1

**Description**

[Technical Field]

The present invention relates to three-dimensional image capturing apparatuses and three-dimensional image capturing methods and, in particular, to a three-dimensional image capturing apparatus and a three-dimensional image capturing method for generating depth information used for generating a three-dimensional image from an input image.

[Background Art]

There are conventional techniques to generate three-dimensional images from two-dimensional images based on depth information (depth map) indicating a depth value for each of regions in an image. The depth value indicates a direction of the depth of an image. For example, the depth value indicates a distance between a camera and an object. In order to obtain the depth information from an image captured with the camera, one depth value is to be determined out of predetermined depth values for each region of the image for the obtainment of the depth information.

For example, Patent Literature 1 discloses a technique to generate an all-focus image out of multiple images each having a different focal length. This technique makes it possible to generate a depth map indicating a depth value for each of pixels. EP1587329 discloses a transmitting-side device that generates an image data by performing an image analysis toward the actually photographed two-dimensional image and also generates depth information useful for converting the two-dimensional image into a stereoscopic vision-use image. Furthermore, the transmitting-side device generates additional subordinate information such as scale information, function specifying information, table specifying information, and the like, and transmits such the information to a receiving-side device. The receiving-side device receives the image data, the depth information, and the additional subordinate information, generates a parallax image on the basis of such the information, and allows an observer to perform stereoscopic vision.

[Citation List]

[Patent Literature]

[PTL 1] Japanese Unexamined Patent Application Publication No. 2001-333324

[Summary of Invention]

[Technical Problem]

Unfortunately, the above conventional technique cannot achieve compatibility between reduction of an increase in calculation cost and improvement in stereoscopic effect.

The conventional technique employs predetermined depth values. In other words, depth resolution is static. The depth resolution is a value to indicate how depth values vary with each other. The depth resolution is higher as a density of the values is higher. The depth resolution is lower as a density of the values is lower.

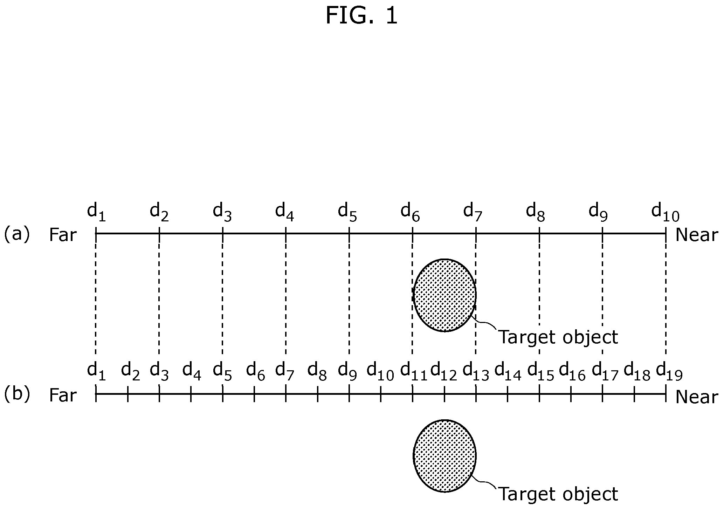

FIG. 1 shows a conventional depth resolution.

The illustration (a) in FIG. 1 shows that 10 depth values $d_1$ to $d_{10}$ are predetermined between the farthest end (longest focal length) and the nearest end (shortest focal length) of the camera. A depth value included in the depth information is selected from the predetermined 10 depth values $d_1$ to $d_{10}$. Here, the selected depth values for a target object are $d_6$ and $d_7$. In other words, only two values; namely, $d_6$ and $d_7$, represent the depth values for the target object. Thus, when an input image is converted into a three-dimensional image, the resulting image rarely expresses the three-dimensional appearance of the target object. Consequently, the generated three-dimensional image suffers from a cardboard effect.

In contrast, in the illustration (b) in FIG. 1, 19 depth values $d_1$ to $d_{19}$ are predetermined between the farthest end and the nearest end of the camera. Here, three values $d_{11}$, $d_{12}$, and $d_{13}$ represent the depth values of the target object. Thus, compared with the case (a) in FIG. 1, the case (b) in FIG. 1 makes it possible to obtain an improved three-dimensional appearance.

In order to determine the depth values of the target object, however, the case (b) requires calculation to each of the 19 depth values $d_1$ to $d_{19}$ for the determination of the depth values. Hence, compared with the case (a) in FIG. 1, the case (b) suffers from an increase in calculation costs (processing amount). Moreover, the case (b) inevitably requires a larger amount of memory to hold the result of the calculation performed to each of the depth values $d_1$ to $d_{19}$.

The present invention is conceived in view of the above problems and has an object to provide a three-dimensional image capturing apparatus and a three-dimensional image capturing method to improve a three-dimensional appearance while curbing an increase in calculation cost and easing a cardboard effect.

[Solution to Problem]

In order to solve the above problems, a three-dimensional image capturing apparatus according to claims 1-8 is defined.
It is noted that, instead of being implemented as a three-dimensional image capturing apparatus, the present invention may be implemented as a method including the processing units for the three-dimensional image capturing apparatus as steps. Moreover, the steps may be implemented as a computer-executable program. Furthermore, the present invention may be implemented as a recording medium, such as a computer-readable compact disc-read only memory (CD-ROM) on which the program is recorded, and as information, data, and signals showing the program. Then, the program, the information, and the signals may be distributed via a communications network, such as the Internet.
Part or all of the constituent elements constituting the three-dimensional image capturing apparatus may be configured from a single System-LSI (Large-Scale Integration).The System-LSI is a super-multi-function LSI manufactured by integrating constituent units on one chip. Specifically, the System-LSI is a computer system including a microprocessor, a ROM, a RAM, or by means of a similar device.

[Advantageous Effects of Invention]

The present invention successfully improves a three-dimensional appearance while curbing an increase in calculation cost and easing a cardboard effect.

[Brief Description of Drawings]

[Fig. 1] FIG. 1 shows a conventional depth resolution.
[Fig. 2] FIG. 2 depicts an exemplary block diagram showing a structure of a three-dimensional image capturing apparatus according to an embodiment of the present invention.
[Fig. 3] FIG. 3 shows exemplary depth resolution according to the embodiment of the present invention.
[Fig. 4] FIG. 4 shows exemplary depth resolution according to the embodiment of the present invention.
[Fig. 5] FIG. 5 shows exemplary depth resolution according to the embodiment of the present invention.
[Fig. 6A] FIG. 6A shows an exemplary user interface used for designating an object according to the embodiment of the present invention.
[Fig. 6B] FIG. 6B shows an exemplary user interface used for designating objects according to the embodiment of the present invention.
[Fig. 7A] FIG. 7A shows an exemplary user interface used for adjusting a stereoscopic effect according to the embodiment of the present invention.
[Fig. 7B] FIG. 7B shows an exemplary user interface used for adjusting a stereoscopic effect according to the embodiment of the present invention.
[Fig. 8] FIG. 8 shows an exemplary relationship between an input image and a depth map according to the embodiment of the present invention.
[Fig. 9] FIG. 9 shows an exemplary relationship between depth values and identifiers according to the embodiment of the present invention.
[Fig. 10] FIG. 10 shows exemplary data held in a cost function holding unit according to the embodiment of the present invention.
[Fig. 11] FIG. 11 shows exemplary data held in the cost function holding unit according to the embodiment of the present invention.
[Fig. 12] FIG. 12 depicts a flowchart which shows an exemplary operation of the three-dimensional image capturing apparatus according to the embodiment of the present invention.
[Fig. 13] FIG. 13 depicts a flowchart which exemplifies setting of the depth resolution according to the embodiment of the present invention.
[Fig. 14] FIG. 14 depicts a flowchart which shows another exemplary operation of the three-dimensional image capturing apparatus according to the embodiment of the present invention.
[Fig. 15] FIG. 15 depicts a flowchart which shows another exemplary operation of the three-dimensional image capturing apparatus according to the embodiment of the present invention.
[Fig. 16] FIG. 16 depicts an exemplary block diagram showing a structure of a three-dimensional image capturing apparatus according to a modification in the embodiment of the present invention.

[Description of Embodiment]

[Embodiment]

Described hereinafter are a three-dimensional image capturing apparatus and a three-dimensional image capturing method according to an embodiment of the present invention, with reference to the drawings. It is noted that the embodiment below is a specific example of the present invention. The numerical values, shapes, materials, constitutional elements, arrangement positions and connecting schemes of the constitutional elements, steps, and an order of steps are examples, and shall not be defined as they are. The present invention shall be defined only by claims. Hence, among the constitutional elements in the embodiment, those not described in an independent claim, which represents the most generic concept of the present invention, are not necessarily required to achieve the objects of the present invention. However, such constitutional elements are introduced to implement a preferable form of the present invention.

The three-dimensional image capturing apparatus according to the embodiment of the present invention includes: a capturing unit which obtains an input image in capturing; a designating unit which designates an object in the input image; a resolution setting unit which sets depth values each representing a different depth position, so that depth resolution near the designated object is higher; and a depth information generating unit which generates depth information that corresponds to the input image, by determining, for each of regions in the input image, a depth value, from among the set depth values, indicating a depth position corresponding to one of the regions.

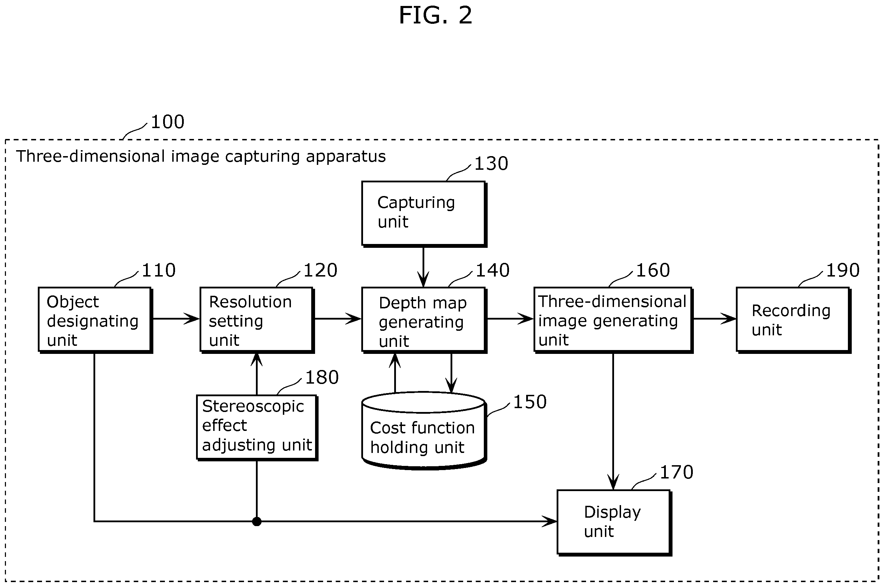

FIG. 2 depicts an exemplary block diagram showing a structure of a three-dimensional image capturing apparatus 100 according to the embodiment of the present invention. The three-dimensional image capturing apparatus 100 generates depth information (depth map) to be used for generating a three-dimensional image out of a two-dimensional input image.

As shown in FIG. 2, the three-dimensional image capturing apparatus 100 includes: an object designating unit 110, a resolution setting unit 120, a capturing unit 130, a depth map generating unit 140, a cost function holding unit 150, a three-dimensional image generating unit 160, a display unit 170, a stereoscopic effect adjusting unit 180, and a recording unit 190.

The object designating unit 110 designates an object (target object) in an input image obtained by the capturing unit 130. The object designating unit 110 may designate two or more objects. The object designating unit 110 designates an object designated by the user via, for example, a user interface. Specifically, the object designating unit 110 designates the user-designated object via the user interface displayed on the display unit 170 and used for receiving the designation by the user.

The object designating unit 110 may also perform image recognition processing on the input image to specify a designated region, and designate the specified designated region as the target object. The image recognition processing includes, for example, facial recognition processing and edge detection processing. The object designating unit 110 may perform facial recognition processing on the input image to specify a face region of a person, and designate the specified face region as the target object.

Furthermore, the object designating unit 110 may additionally designate a second object which differs from the object designated first (first object). Here, the object designating unit 110 may designate two or more second objects.

Here, when the second object is designated, the first object has already been subject to processing for enhancing depth resolution, and the second object has not been subject to processing for enhancing depth resolution yet. Specifically, after the user confirms the stereoscopic effect observed after the depth-resolution-enhancing processing performed on the first object; that is after the depth map is generated once, the object designating unit 110 additionally designates a newly-designated object as the second object.

The resolution setting unit 120 performs processing for enhancing the depth resolution of the object designated by the object designating unit 110. Specifically, the resolution setting unit 120 sets multiple depth values each representing a different depth position, so that, in a direction parallel to a depth direction of the input image, depth resolution near the object designated by the object designating unit 110 is higher than depth resolution positioned apart from the object.

It is noted that the depth direction is perpendicular to a two-dimensional input image. In other words, the depth direction is a front-back direction in the two-dimensional input image; that is, a direction from a display toward the user (or a direction from the user toward the display). Furthermore, a region near the object in the depth direction includes the object and a region surrounding (around) the object in the depth direction.

The depth resolution is a value indicating how depth positions, which are different from each other, vary. Specifically, the depth resolution is higher as a density of the depth positions is higher, and the depth resolution is lower as a density of the depth positions is lower. In other words, the depth resolution is higher as more depth positions are observed in a predetermined region in the depth direction. The depth resolution is lower as fewer depth positions are observed in the predetermined region.

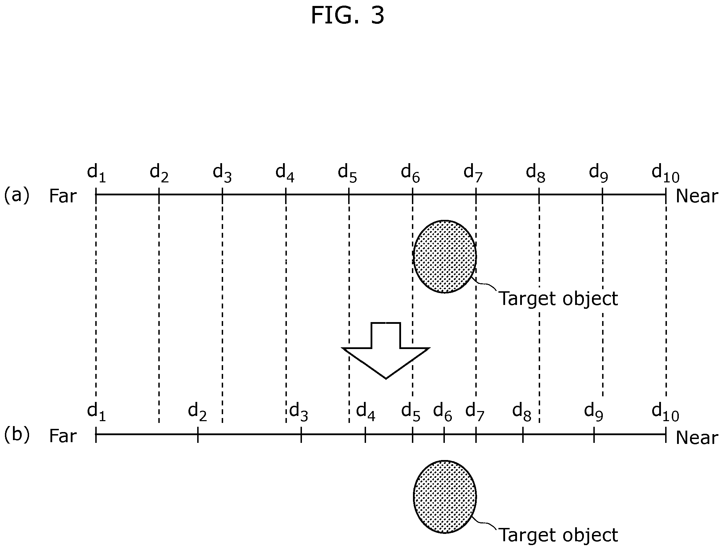

It is noted that a detailed operation of the resolution setting unit 120 shall be described later with reference to FIGS. 3 to 5.

The capturing unit 130 obtains an input image in capturing. The capturing unit 130 includes an optical system such as a lens, and an imaging device which converts incident light into electric signals (input image).The capturing unit 130 moves at least one of the lens and the imaging device to change the distance between the lens and the imaging device so as to shift the focus (focal point).

It is noted that the depth map generating unit 140 employs techniques such as the Depth from Defocus (DFD) and the Depth from Focus (DFF) to determine a depth value. Depending on the techniques, the capturing unit 130 changes how to obtain an input image.

In the DFD, for example, the capturing unit 130 shifts the focus (focal point) and performs capturing multiple times in order to obtain an input image for each of focal points. For example, the capturing unit 130 obtains two input images: one of which is the farthest-end image captured at the longest focal length (farthest end), and the other one of which is the nearest-end image captured at the shortest focal length (nearest end).

In the DFF (focal stacking), for example, the capturing unit 130 shifts the focal point and performs capturing multiple times in order to obtain an input image for each of focal points. Here, the capturing unit 130 obtains as many input images as the number of depth values. In other words, the capturing unit 130 performs capturing using each of depth positions indicated by the depth values as a focal point in order to obtain input images each corresponding to one of the depth positions.

It is noted that a technique for the depth map generating unit 140 to determine depth values shall not be limited to the DFD or the DFF; instead, other techniques may be employed to determine a depth.

As an exemplary depth information generating unit, the depth map generating unit 140 generates two-dimensional depth information (depth map) corresponding to the input image, by determining, for each of two-dimensional regions in the input image, a depth position, from among the depth values set by the resolution setting unit 120, corresponding to one of the regions. Here, each of the two-dimensional regions in the input image includes one or more pixels.

For example, for each of the two-dimensional regions in the input image, the depth map generating unit 140 calculates a cost function which (i) corresponds to one of the depth values set by the resolution setting unit 120 and (ii) indicates the validity of the corresponding depth value. Then, the depth map generating unit 140 determines, as a depth value for the corresponding one of the two-dimensional regions, one of the depth values corresponding to a cost function indicating that the depth value is most appropriate. Here, the cost function is included in the calculated cost functions for the two-dimensional regions. The operation of the depth map generating unit 140 shall be detailed later.

The cost function holding unit 150 is a memory to hold the cost functions calculated by the depth map generating unit 140. The data held in the cost function holding unit 150 shall be detailed later.

Based on the input image and the depth map, the three-dimensional image generating unit 160 generates a three-dimensional image from the input image. It is noted that the input image used here does not have to be identical to the image used for generating the depth map. The three-dimensional image includes, for example, a left-eye image and a right-eye image having parallax. The viewer (user) watches the left-eye image with the left eye and the right-eye image with the right eye so that the user can spatially see the three-dimensional image.

Specifically, for each of two-dimensional regions in the input image, the three-dimensional image generating unit 160 generates parallax information based on a depth value corresponding to the region. The parallax information indicates parallax between the left-eye image and the right-eye image. For example, the parallax information indicates an amount (number of pixels) in which the corresponding region is to be horizontally shifted. The three-dimensional image generating unit 160 horizontally shifts the corresponding region to generate the left-eye image and the right-eye image.

Based on the input image and the depth map, the display unit 170 displays a stereoscopic effect image indicating a stereoscopic effect to be observed when a three-dimensional image is generated. The stereoscopic effect image is generated by the stereoscopic effect adjusting unit 180. The stereoscopic effect image may also be a three-dimensional image generated by the three-dimensional image generating unit 160.

Furthermore, the display unit 170 displays a graphical user interface (GUI). The GUI is an interface used for, for example, receiving from the user designation of an object and adjusting the level of the stereoscopic effect. A specific example of the GUI shall be described later.

Based on the instruction from the user, the stereoscopic effect adjusting unit 180 adjusts the level of the stereoscopic effect. Specifically, the stereoscopic effect adjusting unit 180 receives the instruction from the user via the GUI displayed on the display unit 170 for adjusting the stereoscopic effect. Here, the stereoscopic effect adjusting unit 180 may generate a stereoscopic image showing a stereoscopic effect to be observed when a three-dimensional image is generated from the input image so that the user can check the stereoscopic effect.

For example, the stereoscopic effect adjusting unit 180 receives from the user an instruction indicating to what level the stereoscopic effect is to be enhanced or reduced. In other words, the stereoscopic effect adjusting unit 180 receives from the user an instruction to indicate an object whose stereoscopic effect is to be adjusted and the level of stereoscopic effect. The received instruction is sent to the resolution setting unit 120.

The recording unit 190 records on a recording medium the three-dimensional images, such as the left-eye image and the right-eye image, generated by the three-dimensional image generating unit 160. The recording unit 190 may also record the input image obtained by the capturing unit 130 and the depth map generated by the depth map generating unit 140. It is noted that the recording medium is such as an internal memory included in the three-dimensional image capturing apparatus 100 and a memory card for the three-dimensional image capturing apparatus 100.

Described next is how to set the depth resolution according to the embodiment of the present invention.

FIG. 3 shows exemplary depth resolution according to the embodiment of the present invention.

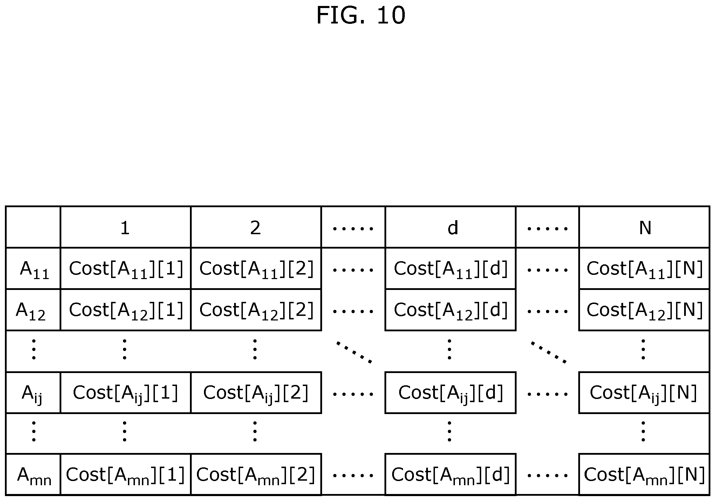

The illustration (a) in FIG. 3 shows that, as shown in the illustration (a) in FIG. 1, 10 depth values $d_1$ to $d_{10}$ are predetermined between the farthest end (longest focal length) and the nearest end (shortest focal length) of the three-dimensional image capturing apparatus 100 (camera). In other words, the three-dimensional image capturing apparatus 100 according to the embodiment has the predetermined number of depth values. The example in (a) in FIG. 3 shows 10 depth values.

Here, the object designating unit 110 designates, as a target object, an object found between the depth positions indicated by the depth values $d_6$ and $d_7$. The resolution setting unit 120 brings at least one of the 10 depth positions close to a depth position near the target object to set 10 depth values $d_1$ to $d_{10}$ as shown in (b) in FIG. 3.

Specifically, the resolution setting unit 120 adjusts previously equally-spaced depth values so that, as the depth values are located farther away from the target object with the target object centered, the neighboring depth values are widely spaced. In other words, the resolution setting unit 120 sets multiple depth values so that the depth values near the target object are narrowly spaced. Such a setting enhances the depth resolution near the target object.

In other words, the resolution setting unit 120 sets multiple depth values so that more depth values are included in a region near the target object than in a region away from the target object (such as a region near the longest focal length or the shortest focal length). The resolution setting unit 120 sets multiple depth values so that the depth values nearer the target object are denser.

Hence, the example in (a) in FIG. 3 shows that the depth values of the target object are represented only by two of the values $d_6$ and $d_7$. In contrast, the example in (b) in FIG. 3 shows that the depth values of the target object are represented by three of the values $d_5$, $d_6$, and $d_7$. Compared with the case (a) in FIG. 3, the case (b) in FIG. 3 successfully shows an improved three-dimensional appearance. Here, the number of the overall depth values remains 10, and the calculation cost for determining the depth values also remains unchanged. Thus, the case (b) also shows a reduction in a calculation cost increase.

Hence, the resolution setting unit 120 sets the depth values by shifting at least one of the depth positions to a depth position near the object designated by the object designating unit 110. This feature makes it possible to have more candidates for the depth values representing depth positions near the object, which contributes to improving the three-dimensional appearance. Moreover, in the feature, the predetermined depth positions are simply moved and there is no need for increasing the number of the depth values, which contributes to reducing an increase in the calculation cost.

It is noted that the setting of the depth resolution is preferably executed when the object is designated to the input image for the first time; that is, when a first object at first is designated. In other words, the resolution setting unit 120 sets the initial depth values by shifting at least one of the predetermined depth positions close to a depth position near the first object designated first by the object designating unit 110. The initial depth values are d1 to d10 shown in (b) in FIG. 3. They are depth values which have received the processing for enhancing the depth resolution at least once.

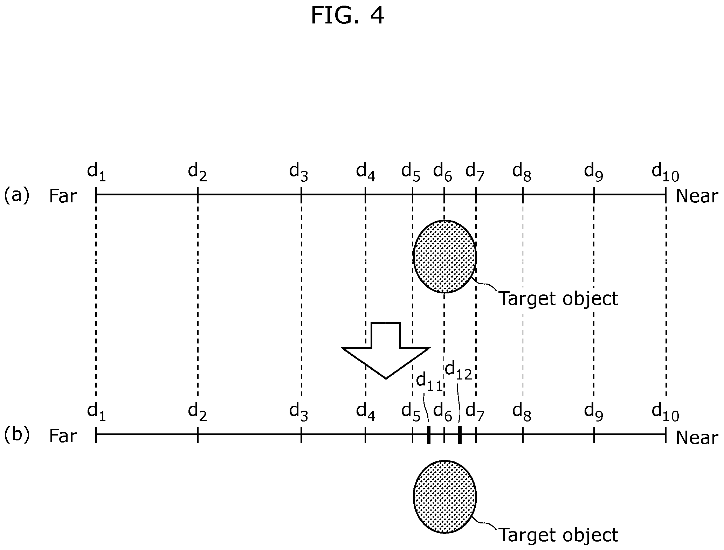

FIG. 4 shows exemplary depth resolution according to the embodiment of the present invention.

The illustration (b) in FIG. 4 shows additional new depth values $d_{11}$ and $d_{12}$ near the target object. In other words, the resolution setting unit 120 sets, as additional depth values, the new depth values $d_{11}$ and $d_{12}$ that indicate depth positions. The depth positions are near the target object and different from the depth positions each indicated in a corresponding one of the initial depth values $d_1$ to $d_{10}$ shown in (b) in FIG. 3. Here, for each of two-dimensional regions in an input image, the depth map generating unit 140 determines a depth value from among the initial depth values $d_1$ to $d_{10}$ and the additional depth values $d_{11}$ and $d_{12}$.

Since the resolution setting unit 120 sets the additional depth values near the object, more candidates are available for the depth values representing depth positions near the object. Such a feature can further enhance the depth resolution and the three-dimensional appearance for the target object.

It is noted that an additional depth value is preferably set after the setting of the initial depth values and the generation of the depth map. Specifically, once the initial depth values have set, the depth map generating unit 140 generates the depth map based on the set initial depth values. Then, based on the generated depth map and the input image, the display unit 170 displays a stereoscopic effect image as well as a GUI which receives from the user an instruction for adjusting the level of the stereoscopic effect.

Upon receiving from the user the instruction for enhancing the stereoscopic effect via the GUI displayed on the display unit 170, the stereoscopic effect adjusting unit 180 notifies the resolution setting unit 120 of the instruction. When the stereoscopic effect adjusting unit 180 sets the stereoscopic effect to be enhanced, the resolution setting unit 120 sets an additional depth value. This feature makes it possible to additionally designate the second object when the user checks the three-dimensional appearance of the first object set first and then desires to increase the three-dimensional appearance of another object. Consequently, the three-dimensional appearance of the second object, as well as that of the first object, is successfully improved.

Here, cost functions which correspond to the initial depth values have already been calculated. Thus, the depth map generating unit 140 may calculate only a cost function which corresponds to the additional depth value. In other words, there is no need to recalculate the cost functions that correspond to the already-set initial depth values. This feature contributes to minimize an inevitable rise in calculation cost to increase the stereoscopic effect.

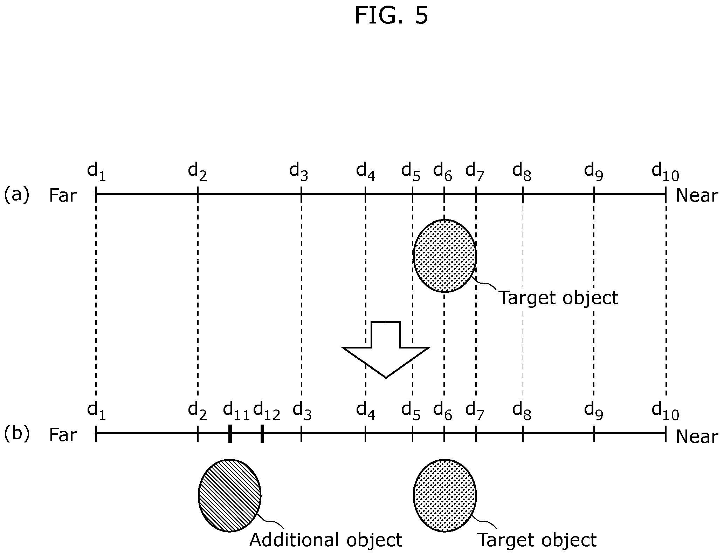

FIG. 5 shows exemplary depth resolution according to the embodiment of the present invention.

In the embodiment, as described above, the object designating unit 110 can additionally designate the second object that differs from the first object. FIG. 5 shows exemplary depth resolution when the second object is additionally designated.

The resolution setting unit 120 sets new depth values (additional depth values $d_{11}$ and $d_{12}$) that indicate depth positions. The depth positions are near the additional object and different from the depth positions each indicated in a corresponding one of the initial depth values $d_1$ to $d_{10}$. Here, for each of two-dimensional regions in an input image, the depth map generating unit 140 determines a depth value from among the initial depth values $d_1$ to $d_{10}$ and the additional depth values $d_1$ and $d_{12}$.

This feature makes it possible to enhance the depth resolution for the newly designated additional object, as well as that for the target object, and contributes to improving the three-dimensional appearance of the target object and the additional object.

It is noted that the second object may be preferably added after the setting of the initial depth values and the generation of the depth map. Specifically, once the initial depth values have set, the depth map generating unit 140 generates the depth map based on the set initial depth values. Then, based on the generated depth map and the input image, the display unit 170 displays a stereoscopic effect image as well as a GUI which receives from the user an instruction for adjusting the level of the stereoscopic effect.

Upon receiving from the user the instruction for designating the second object via the GUI displayed on the display unit 170, the object designating unit 110 additionally designates the second object. When the second object is additionally designated, the resolution setting unit 120 sets a depth value so that the depth resolution for the second object increases. This feature makes it possible to enhance the depth resolution for the new and additionally-designated second object, as well as that for the first object designated first, and contributes to improving the three-dimensional appearance for the first and second objects.

Described next is an exemplary GUI displayed on the display unit 170 according to the embodiment of the present invention.

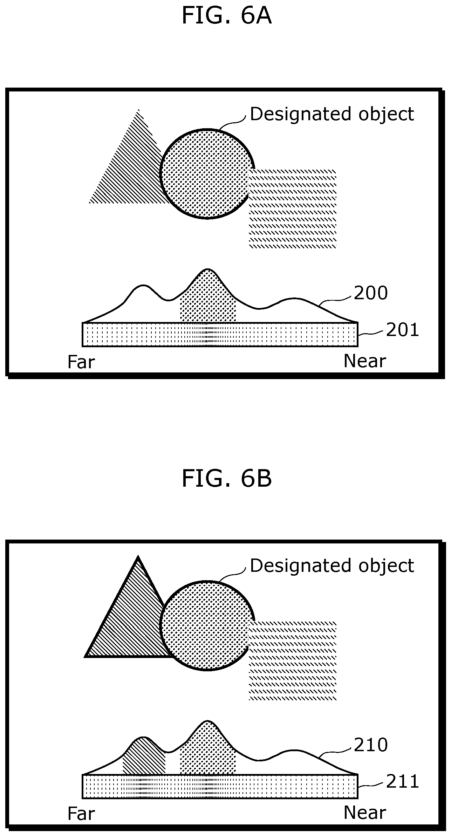

FIG. 6A shows an exemplary user interface used for designating an object according to the embodiment of the present invention.

As shown in FIG. 6A, the display unit 170 displays an input image so that the object designated by the object designating unit 110 is enhanced. Techniques to enhance the object include, for example, the ones to make the object outline bold, to display the object with a highlighter setting, or to highlight the object with an inverted color.

Furthermore, the display unit 170 displays a histogram 200 indicating a depth position of the object. The vertical axis of the histogram 200 indicates the number of pixels. The example in FIG. 6A shows a designated object found approximately in the middle in the depth direction.

Moreover, the display unit 170 displays a stereoscopic effect image 201 indicating a stereoscopic effect. The example in FIG. 6A shows that the stereoscopic effect image 201 indicates the stereoscopic effect with a shading pattern. Specifically, a region having darker shading indicates a stronger stereoscopic effect; that is, the density of the depth values is higher. A region having lighter shading indicates a reduced stereoscopic effect; that is, the density of the depth values is lower. In the embodiment, as shown in FIG. 6A, enhanced is a stereoscopic effect for the region including the designated object.

Here, the display unit 170 displays, for example, a cursor so that the object designating unit 110 can receive, from the user, an instruction for designating an object. For example, when the user encloses a predetermined region in an image displayed on the display unit 170, the object designating unit 110 extracts an object included in the region, and designates the extracted object. Alternatively, the object designating unit 110 may designate the predetermined region itself as an object. The object included in the region may be extracted by image processing such as edge detection processing, facial recognition processing, and color detection processing.

FIG. 6B shows an exemplary user interface used for designating objects according to the embodiment of the present invention.

As shown in FIG. 6B, the display unit 170 displays an input image, enhancing the objects designated by the object designating unit 110.Hence, the objects designated by the user can be indicated. Techniques to enhance the objects include, for example, the ones to make the object outline bold, to display the object with a highlighter setting, or to highlight the object with an inverted color. Here, how to enhance the objects may be changed between the first object designated first and the second object designated second and the following. The example in FIG. 6B shows that a different object has a different gradation.

As shown in FIG. 6A, the display unit 170 displays a histogram 210 indicating depth positions of the objects. The example in FIG. 6B shows that the first object is designated approximately in the middle in the depth direction and the second object is additionally designated at a far end in the depth direction.

When the second object is additionally designated, the resolution setting unit 120 sets an additional depth value near the additional object (second object) as shown in (b) in FIG. 5 so as to enhance the depth resolution for the additional object. Hence, the stereoscopic effect near the second object, as well as that near the first object, is successfully enhanced.

Moreover, the display unit 170 displays a stereoscopic effect image 211 indicating a stereoscopic effect. As the stereoscopic effect image 201 in FIG. 6A indicates, the stereoscopic effect image 211 indicates the stereoscopic effect with a shading pattern. The example in FIG. 6B shows that the stereoscopic effects are enhanced near the first and second objects.

Thus, an additional depth value is set upon receiving an instruction from the user, which successfully expresses a three-dimensional appearance which the user desires. Consequently, the feature makes it possible to curb an increase in calculation cost caused by expressing a three-dimensional appearance of the user's desire.

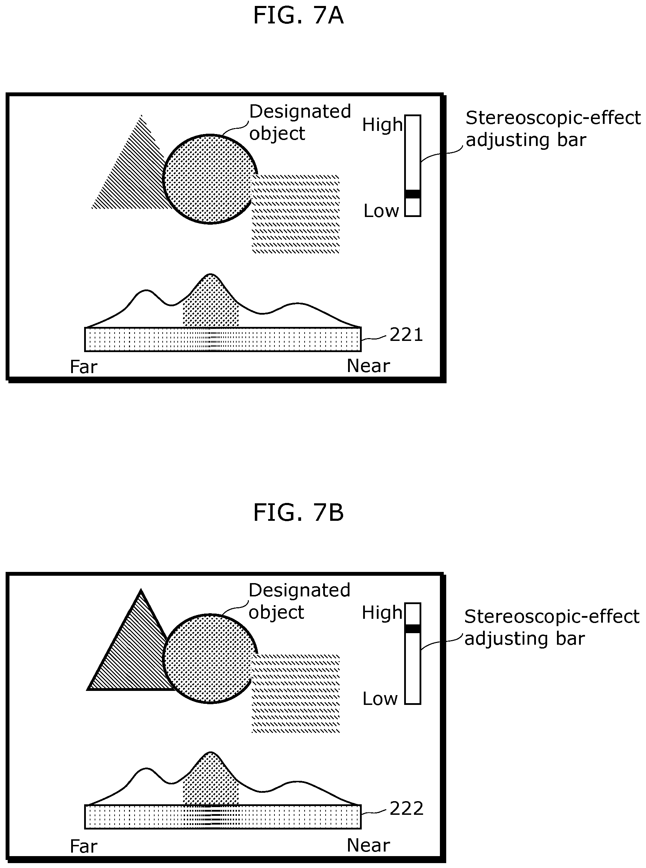

FIGS. 7A and 7B show exemplary user interfaces used for adjusting a stereoscopic effect according to the embodiment of the present invention.

The examples in FIGS. 7A and 7B show a stereoscopic-effect adjusting bar in the displays. The user operates the stereoscopic-effect adjusting bar to adjust the level of the stereoscopic effect.

When the user reduces the stereoscopic effect as shown in FIG. 7A, for example, the stereoscopic effect adjusting unit 180 generates the stereoscopic effect image 211 indicating a reduced stereoscopic effect for the designated object. Since, the stereoscopic effect image indicates the stereoscopic effect with a shading pattern, the stereoscopic effect adjusting unit 180 generates the stereoscopic effect image 211 showing the designated object in a lightened color.

Furthermore, the stereoscopic effect adjusting unit 180 sets the stereoscopic effect to be reduced based on an instruction from the user. Then, when the stereoscopic effect is set to be reduced, the resolution setting unit 120 can reduce the stereoscopic effect by, for example, widening the space between the depth positions near the target object among depth positions indicated in initial depth values. For example, the resolution setting unit 120 updates the depth values so that the space between the depth positions near the target object is wider as the stereoscopic effect is reduced.

The resolution setting unit 120 may also delete, among initial depth values, an initial depth value which indicates a depth position near the target object. For example, the resolution setting unit 120 sets more depth values to-be-deleted near the target object as the stereoscopic effect is reduced. This feature also contributes to reducing the stereoscopic effect.

In contrast, when the user enhances the stereoscopic effect, as shown in FIG. 7B, the stereoscopic effect adjusting unit 180 generates a stereoscopic effect image 222 indicating an enhanced stereoscopic effect for the designated object. Specifically, the stereoscopic effect adjusting unit 180 generates the stereoscopic effect image 222 showing the designated object in a darkened color.

Furthermore, the stereoscopic effect adjusting unit 180 sets the stereoscopic effect to be enhanced based on an instruction from the user. Then, when the stereoscopic effect is set to be enhanced, the resolution setting unit 120 can enhance the stereoscopic effect by, for example, narrowing the space between the depth positions near the target object among depth positions indicated in initial depth values. For example, the resolution setting unit 120 updates the depth values so that the space between the depth positions near the target object is narrower as the stereoscopic effect is enhanced.

The resolution setting unit 120 may also set the additional depth value near the target object as shown in (b) in FIG. 4. For example, the resolution setting unit 120 sets more additional depth values near the target object as the stereoscopic effect is enhanced. This feature also contributes to enhancing the stereoscopic effect.

Described next is an example of how to generate the depth map according to the embodiment of the present invention.

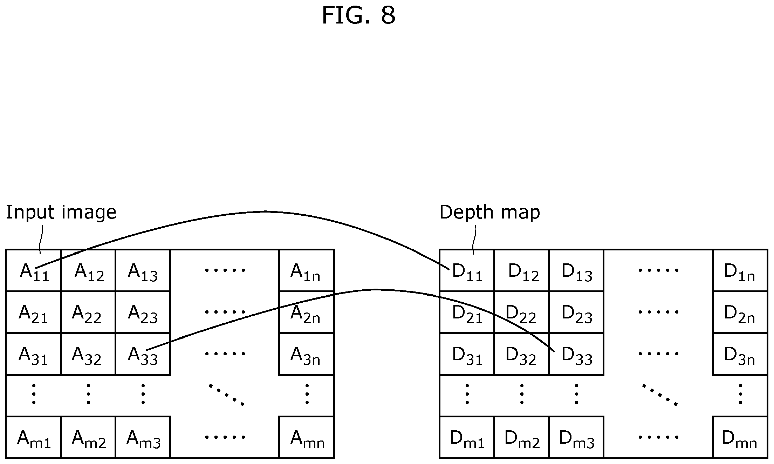

FIG. 8 shows an exemplary relationship between an input image and a depth map (depth information) according to the embodiment of the present invention.

The input image includes pixels $A_{11}$ to $A_{mn}$ arranged in an m x n matrix.

The depth map is an example of the depth information, and shows a depth value for each of two-dimensional regions included in the input image. The example in FIG. 8 illustrates that the depth map shows a depth value for each of pixels included in the input image. In other words, the pixels in the input image and the pixels in the depth map correspond to each other on one-on-one basis. Specifically, the depth value $D_{ij}$ corresponds to the pixel $A_{ij}$ in the input image. Here, i is $1 \leq i \leq m$, and j is $1 \leq i \leq n$.

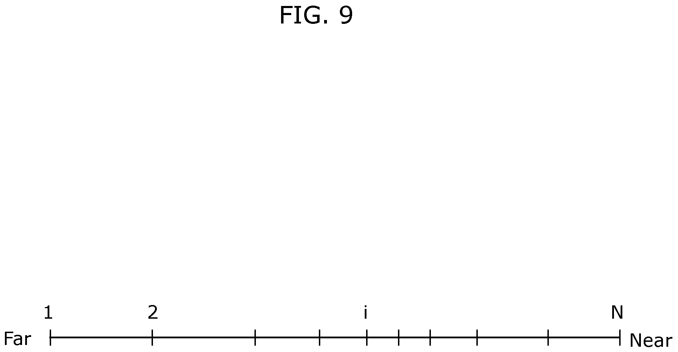

FIG. 9 shows an exemplary relationship between depth values and identifiers according to the embodiment of the present invention.

The resolution setting unit 120 assigns an identifier to each of the set depth values. The example in FIG. 9 shows that, in setting n depth values, the resolution setting unit 120 assigns an identifier "1" to the farthest depth value from the camera and an identifier "N" to the nearest depth value to the camera.

It is noted that how to assign an identifier shall not be limited to this; instead, the resolution setting unit 120 may assign, for example, the identifier "N" to the farthest depth value from the camera and the identifier "1" to the nearest depth value to the camera. Instead of assigning an identifier, the resolution setting unit 120 may use a depth value itself as an identifier.

FIG. 10 shows exemplary data held in the cost function holding unit 150 according to the embodiment of the present invention.

For each of the two-dimensional regions in the input image, the depth map generating unit 140 calculates a cost function corresponding to one of the depth values, and stores the calculated cost function in the cost function holding unit 150. Specifically, for each of the two-dimensional regions in the input image, the cost function holding unit 150 holds the cost function, calculated by the depth map generating unit 140, in association with one of the depth values. Since the cost function holding unit 150 holds the calculated cost functions, the depth map generating unit 140 does not have to recalculate the cost functions and contributes to reducing an increase in calculation cost.

The example in FIG. 10 shows that the cost function holding unit 150 holds cost functions corresponding to (i) the identifiers "1" to "N" and (ii) the pixels $A_{11}$ to $A_{mn}$ in the input image. Here, each of the identifiers "1" to "N" corresponds to one of the depth values set by the resolution setting unit 120. Specifically, first, the depth map generating unit 140 calculates the cost function Cost[$A_{ij}$][d] that corresponds to both of the identifier "d" and the pixel $A_{ij}$. Then, the depth map generating unit 140 holds the calculated cost function Cost[$A_{ij}$][d] in the cost function holding unit 150.

Described here is how specifically a cost function is calculated.

Described first is, using the DFD, how to calculate a cost function when the farthest-end image and the nearest-end image are obtained as input images. It is noted that the details of the calculation are disclosed in Non Patent Literature 1 "Coded Aperture Pairs for Depth from Defocus (Changyin Zhou, Stephen Lin, Shree Nayer)".

A cost function is expressed by the following Expression 1:

[Math. 1]

$$\text{(Expression 1)} \quad E\left(\hat{d} \mid F_1, F_2, \sigma\right) = \min_{\hat{F}_0} \sum_{i=1,2} \left\| \hat{F}_0 \cdot K_i^{\hat{d}} - F_i \right\|^2 + \left\| C \cdot \hat{F}_0 \right\|^2$$

Here, $F_1$ and $F_2$ are frequency coefficients obtained by frequency-transforming two different blurred images. Specifically, $F_1$ is a frequency coefficient obtained by frequency-transforming the nearest-end image, and $F_2$ is a frequency coefficient obtained by frequency-transforming the farthest-end image.

In addition, $K_i^d$ is an optical transfer function (OTF) obtained by frequency-transforming a point spread function (PSF). The depth map generating unit 140 holds in the internal memory a PSF or an OTF corresponding to a focal point. For example, $K_1^d$ is an OTF corresponding to $F_1$; namely, the nearest-end image, and $K_2^d$ is an OTF corresponding to $F_2$; namely, the farthest-end image.

$F_0$ is expressed by Expression 2 below. Here, C is an adjustment coefficient to reduce noise:

[Math. 2]

$$\text{(Expression 2)} \quad \hat{F}_0 = \frac{F_1 \cdot \overline{K}_1^{\hat{d}} + F_2 \cdot \overline{K}_2^{\hat{d}}}{\left| K_1^{\hat{d}} \right|^2 + \left| K_2^{\hat{d}} \right|^2 + \left| C \right|^2}$$

Here, $K^-$ is a complex conjugate of K. After calculating the right term of Expression 1, the depth map generating unit 140 transforms the calculated result into a special domain by inverse frequency transformation. Then, for each of the pixels, the depth map generating unit 140 determines the depth value d having the smallest cost function. It is noted that the cost function represented by Expression 1 shows that the depth value is more appropriate as the value of the cost function is smaller. In other words, the depth value having the smallest cost function is the most appropriate depth value, and the depth value indicates a depth position of the pixel corresponding to the depth value itself.

In the case where an all-focus image is obtained as the input image, the depth map generating unit 140 can calculate a cost function based on a PSF, as described above, to determine the cost function showing the most appropriate depth value.

Hence, the depth map generating unit 140 determines the most appropriate depth position based on a cost function obtained for each of the depth values. This feature contributes to determining the most appropriate depth value among candidates for depth values, and improving a three-dimensional appearance.

Described next is how to calculate a cost function, using the DFF. Here, obtained as input images are images each focused at a depth position indicated in depth values set by the resolution setting unit 120.

The depth map generating unit 140 calculates a contrast for each of the regions in an input image. Specifically, for each of the pixels, the depth map generating unit 140 determines, as a depth value for the pixel, a depth position which corresponds to an input image having the highest contrast among the input images. In other words, the highest contrast denotes the cost function indicating the most appropriate depth value.

It is noted that in the case where (i) a cost function corresponding to an initial depth value has already been calculated and is held in the cost function holding unit 150 and (ii) a new depth value is additionally set by the resolution setting unit 120, the depth map generating unit 140 may only calculate a cost function corresponding to the new additional depth value (additional depth value). Then, the depth map generating unit 140 may store in the cost function holding unit 150 the calculated cost function in association with the additional depth value. Thus, in the case where the additional depth value is set, the depth map generating unit 140 may calculate only a cost function corresponding to an additional depth value and compare the calculated cost function with the held cost function. This feature successfully curbs an increase in calculation cost.

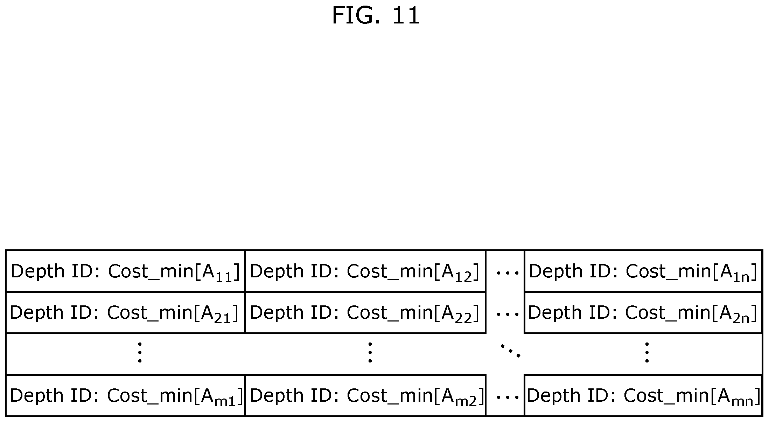

Moreover, for each of the two-dimensional regions in an input image, the cost function holding unit 150 may hold only the cost function indicating that the corresponding depth value is the most appropriate, in association with the most appropriate corresponding depth value. A specific example of the feature is shown in FIG. 11.

FIG. 11 shows exemplary data held in the cost function holding unit 150 according to the embodiment of the present invention. For example, FIG. 11 shows that, for each of the pixels in an input image, the cost function holding unit 150 holds the identifiers (depth ID) shown in FIG. 9 in association with smallest values Cost_min for cost functions.

It is noted that in the case where (i) a cost function corresponding to an initial depth value has already been calculated and the smallest value of the calculated cost function is held in the cost function holding unit 150 and (ii) a new depth value is additionally set by the resolution setting unit 120, the depth map generating unit 140 may only calculate a cost function corresponding to the new additional depth value (additional depth value). Then, the depth map generating unit 140 compares the calculated cost function with the cost function held in the cost function holding unit 150.

In the case where the calculated cost function is more appropriate than the cost function held in the cost function holding unit 150, the depth map generating unit 140 determines that the additional depth value is the depth value for a corresponding one of the two-dimensional regions. In addition, the depth map generating unit 140 replaces the cost function held in the cost function holding unit 150 with the calculated cost function. Specifically, in the case where the calculated cost function is smaller than the smallest value of the cost function, the depth map generating unit 140 determines that the additional depth value is the depth value of a corresponding one of the two-dimensional regions, and holds the calculated cost function instead of the smallest value of the cost function held in the cost function holding unit 150.

In the case where the cost function held in the cost function holding unit 150 is more appropriate than the calculated cost function, the depth map generating unit 140 determines that the depth value corresponding to the cost function held in the cost function holding unit 150 is the depth value of a region corresponding to the depth value itself. Here, the cost functions are not replaced.

Hence, in the case where the additional depth value is set, the depth map generating unit 140 may calculate only the cost function corresponding to the additional depth value, and compare the calculated cost function with the held cost function. This feature contributes to reducing an increase in calculation cost. Furthermore, the cost function holding unit 150 may hold, among calculated cost functions, only the cost function whose depth value is the most appropriate. This feature contributes to effective use of memory resources.

Exemplified next is an operation of the three-dimensional image capturing apparatus 100 according to the embodiment of the present invention.

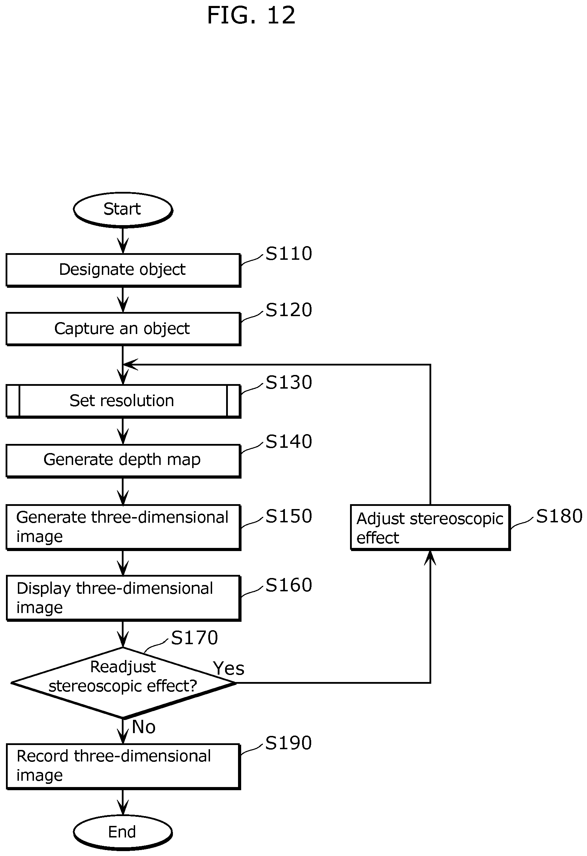

FIG. 12 depicts a flowchart which shows an exemplary operation of the three-dimensional image capturing apparatus 100 according to the embodiment of the present invention. It is noted that FIG. 12 shows an operation for generating the depth map based on the DFD.

First, the object designating unit 110 designates an object (S110). For example, the object designating unit 110 causes the display unit 170 to superimpose a GUI, for designating an object as shown in FIG. 6A, on an input image obtained by the capturing unit 130 and to display the input image, so that the object designating unit 110 receives a user instruction to designate an object. Then, based on the received instruction, the object designating unit 110 designates the object.

Then, the capturing unit 130 obtains the input image in capturing (S120). Here, the capturing unit 130 obtains two input images; namely, the farthest-end image and the nearest-end image.

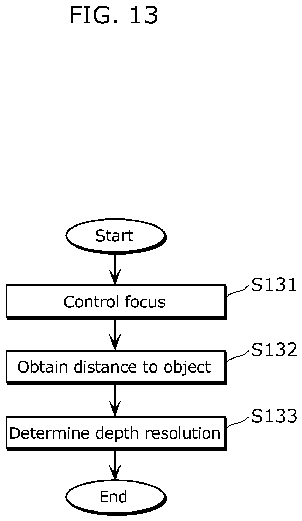

Then, the resolution setting unit 120 sets depth values so that, in a direction parallel to a depth direction of the input images, depth resolution near the object designated by the object designating unit 110 is higher (S130). The process is specifically shown in FIG. 13.

FIG. 13 depicts a flowchart which exemplifies setting of the depth resolution according to the embodiment of the present invention.

First, the resolution setting unit 120 (or a control unit for controlling the entire three-dimensional image capturing apparatus 100) controls a lens to focus the object designated by the object designating unit 110 (S131).

Then, the resolution setting unit 120 obtains the distance to the object based on the lens information (S132), and converts the obtained distance into a depth value. Here, the lens information indicates, for example, a focal length (1 cm to ∞ (infinity)) obtained when the designated object is focused. Hence, the resolution setting unit 120 can obtain a depth position of the object designated by the object designating unit 110.

Then, based on the obtained depth position, the resolution setting unit 120 determines depth resolution (S133). In other words, the resolution setting unit 120 sets depth values each representing a different depth position, so that depth resolution near the object is higher than depth resolution apart from the object. For example, the resolution setting unit 120 sets the depth values as initial depth values as shown in (b) in FIG. 3, by shifting at least one of the depth positions close to a depth position of the designated object. Here, the depth positions are predetermined and different from each other.

With reference to FIG. 12 again, then, the depth map generating unit 140 generates depth information (depth map) corresponding to the input images (S140). Specifically, the depth map generating unit 140 generates the depth map by determining, for each of the pixels in the input images, a depth value, from among the depth values set by the resolution setting unit 120, indicating a depth position corresponding to one of the pixels. Here, based on the DFD as described above, the depth map generating unit 140 calculates a cost function with Expressions 1 and 2, and determines for each pixel the depth value having the smallest cost function.

Next, based on the input images and the depth map, the three-dimensional image generating unit 160 generates a three-dimensional image (S150). Then, the display unit 170 displays the three-dimensional image generated by the three-dimensional image generating unit 160 (S160).

Here, the stereoscopic effect adjusting unit 180 determines whether or not to have received a user instruction for adjusting a stereoscopic effect (S170). Specifically, the stereoscopic effect adjusting unit 180 causes the display unit 170 to display a stereoscopic-effect adjusting GUI, such as the stereoscopic-effect adjusting bar shown in FIGS. 7A and 7B. Then, the stereoscopic effect adjusting unit 180 determines whether or not to have received the user instruction for adjusting the stereoscopic effect via the stereoscopic-effect adjusting GUI.

In the case where the user gives an instruction to adjust the stereoscopic effect (S170: Yes), the stereoscopic effect adjusting unit 180 sets, based on the user instruction, to what level the stereoscopic effect for the object is to be enhanced or reduced (S180).

For example, when the stereoscopic effect adjusting unit 180 sets the stereoscopic effect to be enhanced, the resolution setting unit 120 sets a new depth value indicating a depth position near the object (S130). Here, there is no need to control the focus (S131) and obtain the distance to the object (S132) shown in FIG. 13. In other words, based on the depth positions of the already-obtained object, the resolution setting unit 120 may set an additional depth value near the object.

Then, the depth map generating unit 140 further calculates only the cost function corresponding to the additional depth value (S140). In other words, the cost function corresponding to the initial depth value has already been calculated, and thus does not have to be recalculated. This feature successfully curbs an increase in calculation cost.

It is noted that when the stereoscopic effect adjusting unit 180 sets the stereoscopic effect to be reduced, the resolution setting unit 120 widens the space between the depth values near the object or excludes a depth value near the object so as to update the depth values.

Then, subsequently carried out in a similar manner are: generation (S150) and display (S160) of the three-dimensional image, and determination whether or not the stereoscopic effect is to be adjusted (S170).

In the case where the user does not give an instruction not to adjust the stereoscopic effect (S170: No), the recording unit 190 records the three-dimensional image on a recording medium (S190). Here, the recording unit 190 may record the input images and the depth map.

It is noted that, in the embodiment, the three-dimensional image does not have to be generated. Instead of generating the three-dimensional image, for example, the stereoscopic effect adjusting unit 180 may generate, in Step S150, a stereoscopic-effect image showing a stereoscopic effect. The effect appears when a three-dimensional image is generated based on the input images and the depth map. Here, in Step S160, the display unit 170 displays the stereoscopic-effect image, which includes the stereoscopic effect images 221 and 222 in FIGS. 7A and 7B, showing a stereoscopic effect.

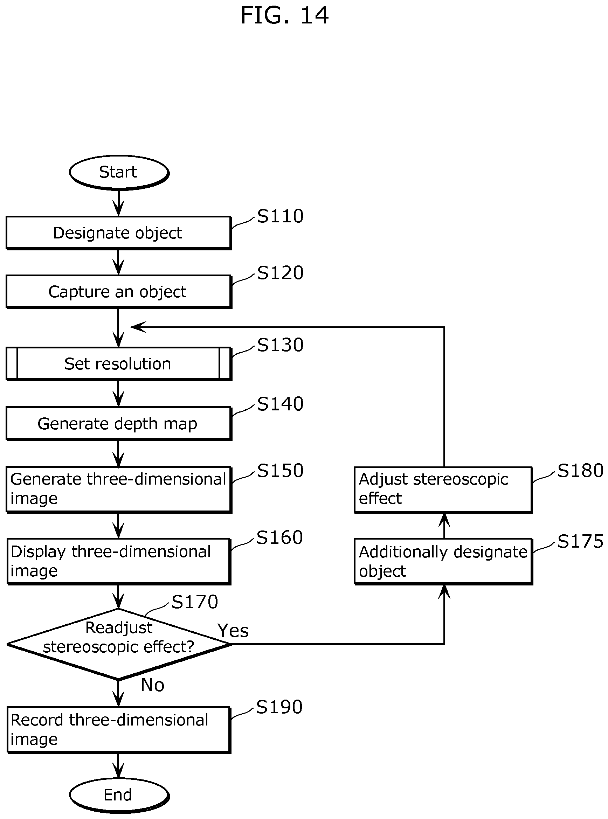

Described next is an operation carried out when another object is additionally designated, with reference to FIG. 14.

FIG. 14 depicts a flowchart which shows another exemplary operation of the three-dimensional image capturing apparatus 100 according to the embodiment of the present invention. It is noted that the flowchart in FIG. 14 is almost the same as that in FIG. 12. Thus, the differences between the flowcharts are mainly described, and the description of the same points shall be omitted.

Here, when receiving additional designation of a new object in the determination whether or not the stereoscopic effect is to be adjusted (S170), the stereoscopic effect adjusting unit 180 determines that the stereoscopic effect needs to be adjusted (S170: Yes). Here, the object designating unit 110 causes the display unit 170 to display a GUI to be used for receiving the designation of the object, and receives from the user the additional designation of the object via the GUI.

When receiving from the user the additional designation of the object (S170: Yes), the object designating unit 110 additionally designates the object instructed by the user (S175). Here, the stereoscopic effect adjusting unit 180 adjusts the stereoscopic effect of the additionally designated second object via the GUI for adjusting the stereoscopic effect (S180). In other words, the stereoscopic effect adjusting unit 180 adjusts, based on the user instruction, to what level the stereoscopic effect for the object is to be enhanced or reduced.

For example, when the stereoscopic effect adjusting unit 180 sets the stereoscopic effect to be enhanced, the resolution setting unit 120 sets a new depth value indicating a depth position near the object (S130). Here, as shown in the flowchart in FIG. 13, the resolution setting unit 120 controls the focus (S131), and obtains the distance to the newly added object (S132). Instead, the resolution setting unit 120 may also obtain the distance to the additional object by obtaining, from the depth map generated in the step S140, a depth value of the pixel position indicating the additional object.

Then, the resolution setting unit 120 newly adds a depth value, indicating the depth position near the additional object, to determine the depth resolution (S133). Then, the depth map generating unit 140 further calculates only the cost function corresponding to the additional depth value (S140). In other words, the cost function corresponding to the initial depth value has already been calculated, and thus does not have to be recalculated. This feature successfully curbs an increase in calculation cost.

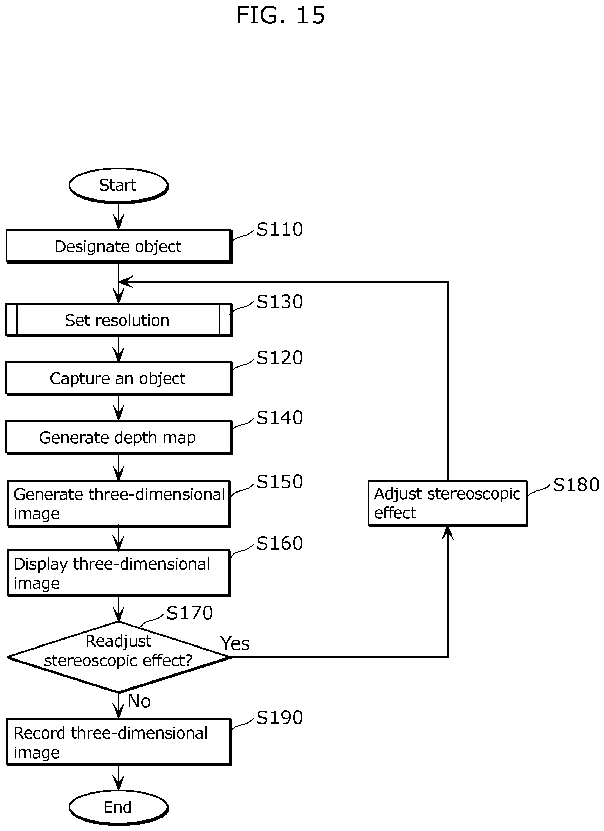

FIG. 15 depicts a flowchart which shows another exemplary operation of the three-dimensional image capturing apparatus 100 according to the embodiment of the present invention. It is noted that FIG. 15 shows an operation for generating the depth map based on the DFD (focal stacking, for example). The flowchart in FIG. 15 is almost the same as that in FIG. 12. Thus, the differences between the flowcharts are mainly described, and the description of the same points shall be omitted.

The DFF requires multiple input images each of which corresponds to a different depth position. Thus, the capturing (S120) is carried out after the depth resolution setting (S130), so that, on one-on-one basis, the obtained input images correspond to multiple depth positions indicated by set multiple depth values.

It is noted that in the case where input images are previously obtained at many focal points, additional capturing does not have to be carried out. In other words, more input images than the number of the depth values may previously be obtained at focal points corresponding to the values to be obtained when the depth values are updated or another depth value is added. Thus, when the predetermined depth values are updated or when a new depth value is added, the depth values may be updated to those corresponding to the focal points of obtained input images, or the new depth value may be added.

Hence, the three-dimensional image capturing apparatus 100 according to the embodiment of the present invention sets multiple initial depth values so that the depth resolution is higher near the designated object, and generates a depth map based on the set initial depth values. Then, after having the user check the stereoscopic effect observed when the generated depth map is used, the three-dimensional image capturing apparatus 100 accepts the additional object and the setting of the stereoscopic effect adjustment.

As described above, the three-dimensional image capturing apparatus 100 according to the embodiment of the present invention includes: the capturing unit 130 which obtains an input image in capturing; the object designating unit 110 which designates an object in the input image; the resolution setting unit 120 which sets depth values each representing a different depth position, so that depth resolution is high near the designated object; and the depth map generating unit 140 which generates a depth map that corresponds to the input image, by determining, for each of regions in the input image, a depth value indicating a depth position corresponding to one of the regions, the determined depth value being included in the set depth values.

This configuration enhances the depth resolution near the designated object, which contributes to having more candidates for the depth values representing depth positions near the object. Consequently, the three-dimensional image capturing apparatus 100 can ease a cardboard effect of the designated object, and improve the three-dimensional appearance of the object. Here, the three-dimensional image capturing apparatus 100 simply enhances the depth resolution near the object greater than resolution of other regions, which, for example, eliminates the need for increasing the total number of the candidates of the depth values. Consequently, this feature contributes to curbing an increase in calculation cost.

Although only an exemplary embodiment of this invention has been described in detail above, those skilled in the art will readily appreciate that many modifications are possible in the exemplary embodiment without materially departing from the novel teachings and advantages of this invention. Accordingly, all such modifications are intended to be included within the scope of this invention.

In the example shown in FIG. 5, the resolution setting unit 120 sets the new depth value near the second object; instead, the resolution setting unit 120 may update the initial depth values to enhance the depth resolution near the second object. Specifically, the resolution setting unit 120 may update the initial depth values by shifting at least one of the initial depth values, indicated by the initial depth values, closer to a depth value near the second object additionally designated by the object designating unit 110.

This feature allows the object designating unit 110 to additionally designate the second object when the user checks the three-dimensional appearance of the first object set first and then desires to increase the three-dimensional appearance of another object. Consequently, the three-dimensional appearance of the second object, as well as that of the first object, is successfully improved. Here, the resolution setting unit 120 simply moves the predetermined depth position and eliminates the need for increasing the number of the depth values, which contributes to curbing an increase in calculation cost.

Moreover, in the examples in FIGS, 6A and 6B, the display unit 170 shows the stereoscopic effect images 201 and 211 having a shading pattern. Instead of the stereoscopic effect images 201 and 211, the display unit 170 may display a three-dimensional image generated by the three-dimensional image generating unit 160 as a stereoscopic effect image. This feature allows the user to directly watch the three-dimensional image generated out of an input image to check the stereoscopic effect. Consequently, the user can adjust the stereoscopic effect more appropriately.

In other words, since the display unit 170 displays the three-dimensional image, the user can directly check the stereoscopic effect. Since the user can easily adjust the stereoscopic effect, the expressed stereoscopic effect is his or her desired one. Consequently, the feature makes it possible to curb an increase in calculation cost caused by expressing a three-dimensional appearance which the user does not desire.

Furthermore, the example in FIG. 13 shows how to obtain a depth position of the object from the lens information; instead, a PSF may be used to calculate cost functions for the predetermined depth values to obtain depth values of the object. Here, approximate positions are acceptable for the depth values of the object. Thus, the cost functions may be calculated for fewer depth values than those actually to be determined. In other words, the depth values of the object may be set by generating a simpler depth map (the processing corresponding to S140 in FIG. 12). This feature successfully curbs an increase in calculation cost.

In addition, when multiple objects are designated first, designation of an object may be canceled instead of adding an object (S175).Here, the depth position near the excluded object may be either added or brought close to a designated object.

Each of the processing units included in the three-dimensional image capturing apparatus according to the embodiment is typically implemented in a form of an LSI; that is, an integrated circuit (IC). The processing units may be made as separate individual chips, or as a single chip to include a part or all thereof. For example an integrated circuit according to the embodiment includes the object designating unit 110, the resolution setting unit 120, and the depth map generating unit 140.

Here, the integrated circuit is referred as LSI, but there are instances where, due to a difference in the degree of integration, the integrated circuit may be referred as IC, System-LSI, super LSI, and ultra LSI.

Furthermore, the means for circuit integration is not limited to the LSI, and implementation in the form of a dedicated circuit or a general-purpose processor is also available. In addition, it is also acceptable to use a field programmable gate array (FPGA) that is programmable after the LSI has been manufactured, and a reconfigurable processor in which connections and settings of circuit cells within the LSI are reconfigurable.

Furthermore, if an integrated circuit technology that replaces the LSI appears thorough the progress in the semiconductor technology or an other derived technology, that technology can naturally be used to carry out integration of the constituent elements. Biotechnology can be applied to the integrated circuit technology.

Moreover, part or all of the functions of the three-dimensional image capturing apparatus according to the embodiment of the present invention may be implemented by a processor, such as a central processing unit (CPU) executing a program.

In addition, the present invention may be the program and a recording medium on which the program is recorded. As a matter of course, the program may be distributed via a transmission medium, such as the Internet.

Furthermore, all the above numbers are exemplary ones to specifically describe the present invention. Thus, the present invention shall not be limited to those exemplary numbers. Moreover, relations of connections between constitutional elements are exemplary ones to specifically describe the present invention. Hence, the relations of connections to implement the functions of the present invention shall not be limited to those described above.

In addition, the embodiment is implemented in a form of hardware and/or software. The implementation in a form of hardware is also viable in a form of software, and vice versa.

Furthermore, the constitutional elements of the three-dimensional image capturing apparatus according to the embodiment of the present invention are exemplary ones to specifically describe the present invention. Thus, the three-dimensional image capturing apparatus of the present invention does not necessarily have to include all of the above constitutional elements. In other words, the three-dimensional image capturing apparatus of the present invention may include as few constitutional elements as possible to achieve the effects of the present invention.

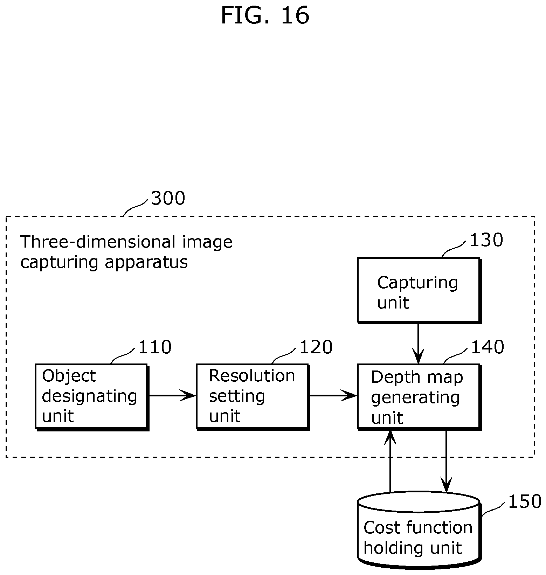

For example, FIG. 16 depicts an exemplary block diagram showing a structure of a three-dimensional image capturing apparatus 300 according to a modification in the embodiment of the present invention. As shown in FIG. 16, the three-dimensional image capturing apparatus 300 according to a modification in the embodiment of the present invention includes the object designating unit 110, the resolution setting unit 120, the capturing unit 130, and the depth map generating unit 140. It is noted that each processing unit carries out the same processing as its equivalent found in FIG. 2 and having the same numerical reference. Thus, the details thereof shall be omitted.

Hence, a three-dimensional image capturing apparatus of the present invention successfully curbs an increase in calculation cost and increases a stereoscopic effect.

Similarly, a three-dimensional image capturing method for the three-dimensional image capturing apparatus is an exemplary one to specifically describe the present invention. Thus, the three-dimensional image capturing method for the three-dimensional image capturing apparatus does not necessarily have to include all of the steps. In other words, the three-dimensional image capturing method of the present invention may include as few steps as possible to achieve the effects of the present invention. Furthermore, the sequence of the steps to be executed is an exemplary one to specifically describe the present invention. Thus, another sequence may be employed. Moreover, part of the steps may be simultaneously (in parallel) executed with the other steps.

[Industrial Applicability]

The present invention is effective in curbing an increase in calculation cost, reducing a cardboard effect, and improving a three-dimensional appearance. The present invention is applicable to a digital camera, for example.

[Reference Signs List]

| | |
|---|---|
| 100 and 300 | Three-dimensional image capturing apparatus |
| 110 | Object designating unit |
| 120 | Resolution setting unit |
| 130 | Capturing unit |
| 140 | Depth map generating unit |
| 150 | Cost function holding unit |
| 160 | Three-dimensional image generating unit |
| 170 | Display unit |
| 180 | Stereoscopic effect adjusting unit |
| 190 | Recording unit |
| 200 and 210 | Histogram |
| 201, 211, 221, and 222 | Stereoscopic effect image |

**Claims**

1. A three-dimensional image capturing apparatus which generates depth information to be used for generating a three-dimensional image from an input image, the three-dimensional image capturing apparatus comprising:

    a capturing unit (130) configured to obtain the input image in capturing;
    an object designating unit (110) configured to designate a first object in the input image obtained by the capturing unit (130);
    a resolution setting unit (120) configured to set depth values, each of which represents a different depth position, as initial depth values so that, in a direction parallel to a depth direction of the input image, depth resolution near the first object is higher than depth resolution positioned apart from the first object, the first object being designated by the object designating unit (110);

a depth information generating unit (140) configured to generate the depth information corresponding to the input image by determining, for each of two-dimensional regions in the input image, a depth value, from among the depth values set by the resolution setting unit, indicating a depth position corresponding to one of the two-dimensional regions;

a display unit (170) configured to display a stereoscopic effect image showing a stereoscopic effect to be observed when the three-dimensional image is generated based on the input image and the depth information; and

a stereoscopic effect adjusting unit (180) configured to adjust a level of the stereoscopic effect based on an instruction from a user,

wherein, in the case where the stereoscopic effect adjusting unit (180) sets the stereoscopic effect to be enhanced, the resolution setting unit (120) is further configured to set, as an additional depth value, a new depth value which indicates a depth position that is near the first object and different from the depth positions each indicated in a corresponding one of the initial depth values, and

the depth information generating unit (140) is configured to determine, for each of the two-dimensional regions in the input image, a depth value from among the initial depth values and the additional depth value,

wherein, for each of the two-dimensional regions in the input image, the depth information generating unit (140) is configured to:

(a) calculate a cost function which corresponds to a value of a pixel of one of the depth values set by the resolution setting unit, and indicates appropriateness of the corresponding depth value, the cost function (i) being calculated using a point spread function (PSF) or (ii) indicating a contrast of a corresponding one of the two-dimensional regions; and

(b) determine, as a depth value for a corresponding one of the two-dimensional regions, a depth value corresponding to a cost function whose corresponding depth value is most appropriate,

the three-dimensional image capturing apparatus further comprising a cost function holding unit (150) configured to hold the cost function calculated by the depth information generating unit (140),

wherein, for each of the two-dimensional regions in the input image, the cost function holding unit (150) is configured to hold only the cost function, whose corresponding depth value is most appropriate, in association with the most appropriate corresponding depth value, and

wherein the resolution setting unit (120) is further configured to set, as an additional depth value, a new depth value which indicates a depth position that is near the first object and different from the depth positions each indicated in a corresponding one of the initial depth values, and

for each of the two-dimensional regions in the input image, the depth information generating unit (140) is further configured to:

(a) calculate a cost function which corresponds to the additional depth value;

(b) compare the calculated cost function with the cost function held in the cost function holding unit (150); and

(c) (i) in the case where the calculated cost function is more appropriate than the cost function held in the cost function holding unit, determine that the additional depth value is a depth value for a corresponding one of the two-dimensional regions, and replace the cost function held in the cost function holding unit (150) with the calculated cost function and (ii) in the case where the cost function held in the cost function holding unit (150) is more appropriate than the calculated cost function, determine that a depth value included in the set depth values and corresponding to the cost function held in the cost function holding unit (150) is a depth value for a corresponding one of the two-dimensional regions.

2. The three-dimensional image capturing apparatus according to Claim 1,
wherein the resolution setting unit is configured to set the initial depth values by shifting at least one of the depth positions close to a depth position of the first object designated by the designating unit.

3. The three-dimensional image capturing apparatus according to Claim 1, further comprising
a three-dimensional image generating unit configured to generate the three-dimensional image from the input image, based on the input image and the depth information,
wherein the display unit is configured to display the three-dimensional image as the stereoscopic effect image.

**4.** The three-dimensional image capturing apparatus according to any one of Claims 1 to 3,
wherein the designating unit is further configured to additionally designate a second object which is different from the first object and included in the input image obtained by the capturing unit,
the resolution setting unit is further configured to set, as an additional depth value, a new depth value which indicates a depth position that is near the second object and different from the depth positions each indicated in a corresponding one of the initial depth values, and
the depth information generating unit is configured to determine, for each of the two-dimensional regions in the input image, a depth value from among the initial depth values and the additional depth value.

**5.** The three-dimensional image capturing apparatus according to any one of Claims 1 to 3,
wherein the designating unit is further configured to additionally designate a second object which is different from the first object and included in the input image obtained by the capturing unit, and
the resolution setting unit is configured to update the initial depth values by shifting at least one of the depth positions close to a depth position of the second object additionally designated by the designating unit, each of the depth positions being indicated in a corresponding one of the initial depth values.

**6.** The three-dimensional image capturing apparatus according to Claim 1,
wherein, for each of the two-dimensional regions in the input image, the cost function holding unit (150) is configured to hold the cost function, calculated by the depth information generating unit (140), in association with one of the depth values.

**7.** The three-dimensional image capturing apparatus according to Claim 6,
wherein the resolution setting unit (120) is further configured to set, as an additional depth value, a new depth value which indicates a depth position that is near the first object and different from the depth positions each indicated in a corresponding one of the initial depth values, and
for each of the two-dimensional regions in the input image, the depth information generating unit (140) is further configured to:

(a) calculate a cost function which corresponds to the additional depth value; and
(b) store the calculated cost function in the cost function holding unit (150) in association with the additional depth value.

**8.** The three-dimensional image capturing apparatus according to Claim 1, wherein
a the display unit (170) is further configured to display the input image so that the first object designated by the designating unit is enhanced.

**9.** A three-dimensional image capturing method for generating depth information to be used for generating a three-dimensional image from an input image, the three-dimensional image capturing method comprising:

obtaining the input image in capturing;
designating an object in the input image obtained in the obtaining;
setting depth values, each of which represents a different depth position, as initial depth values so that, in a direction parallel to a depth direction of the input image, depth resolution near the object is higher than depth resolution positioned apart from the object, the object being designated in the designating;
generating the depth information corresponding to the input image by determining, for each of two-dimensional regions in the input image, a depth value, from among the depth values set in the setting, indicating a depth position corresponding to one of the two-dimensional regions;
displaying a stereoscopic effect image showing a stereoscopic effect to be observed when the three-dimensional image is generated based on the input image and the depth information; and
adjusting a level of the stereoscopic effect based on an instruction from a user,
wherein, in the case where the stereoscopic effect to be enhanced is set in the adjusting, a new depth value is further set as an additional depth value in the setting, the new depth value indicating a depth position that is near the first object and different from the depth positions each indicated in a corresponding one of the initial depth values, and
in the generating, a depth value is determined, for each of the two-dimensional regions in the input image, from among the initial depth values and the additional depth value,

wherein, for each of the two-dimensional regions in the input image,

(a) calculating a cost function which corresponds to a value of a pixel of one of the depth values set by the resolution setting unit, and indicates appropriateness of the corresponding depth value, the cost function (i) being calculated using a point spread function (PSF) or (ii) indicating a contrast of a corresponding one of the two-dimensional regions; and

(b) determining, as a depth value for a corresponding one of the two-dimensional regions, a depth value corresponding to a cost function whose corresponding depth value is most appropriate,

holding only the calculated cost function, whose corresponding depth value is most appropriate, in association with the most appropriate corresponding depth value, and

setting, as an additional depth value, a new depth value which indicates a depth position that is near the first object and different from the depth positions each indicated in a corresponding one of the initial depth values, and

for each of the two-dimensional regions in the input image,

(a) calculating a cost function which corresponds to the additional depth value;

(b) comparing the calculated cost function with the cost function held in the cost function holding unit (150); and

(c) (i) in the case where the calculated cost function is more appropriate than the held cost function, determining that the additional depth value is a depth value for a corresponding one of the two-dimensional regions, and replacing the held cost function with the calculated cost function and (ii) in the case where the held cost function is more appropriate than the calculated cost function, determining that a depth value included in the set depth values and corresponding to the held cost function held is a depth value for a corresponding one of the two-dimensional regions.

10. A program which causes a computer to execute the three-dimensional image capturing method according to Claim 9.

11. An integrated circuit which generates depth information to be used for generating a three-dimensional image from an input image, the integrated circuit comprising:

a capturing unit configured to obtain the input image in capturing;

a designating unit configured to designate a first object in the input image obtained by the capturing unit;

a resolution setting unit configured to set depth values, each of which represents a different depth position, as initial depth values so that, in a direction parallel to a depth direction of the input image, depth resolution near the first object is higher than depth resolution positioned apart from the first object, the first object being designated by the designating unit;

a depth information generating unit configured to generate the depth information corresponding to the input image by determining, for each of two-dimensional regions in the input image, a depth value, from among the depth values set by the resolution setting unit, indicating a depth position corresponding to one of the two-dimensional regions;

a display unit configured to display a stereoscopic effect image showing a stereoscopic effect to be observed when the three-dimensional image is generated based on the input image and the depth information; and

a stereoscopic effect adjusting unit configured to adjust a level of the stereoscopic effect based on an instruction from a user,

wherein, in the case where the stereoscopic effect adjusting unit sets the stereoscopic effect to be enhanced, the resolution setting unit is further configured to set, as an additional depth value, a new depth value which indicates a depth position that is near the first object and different from the depth positions each indicated in a corresponding one of the initial depth values, and

the depth information generating unit is configured to determine, for each of the two-dimensional regions in the input image, a depth value from among the initial depth values and the additional depth value,

wherein, for each of the two-dimensional regions in the input image, the depth information generating unit (140) is configured to:

(a) calculate a cost function which corresponds to a value of a pixel of one of the depth values set by the resolution setting unit, and indicates appropriateness of the corresponding depth value, the cost function (i) being calculated using a point spread function (PSF) or (ii) indicating a contrast of a corresponding one of the two-dimensional regions; and

(b) determine, as a depth value for a corresponding one of the two-dimensional regions, a depth value corresponding to a cost function whose corresponding depth value is most appropriate,

the three-dimensional image capturing apparatus further comprising a cost function holding unit (150) configured to hold the cost function calculated by the depth information generating unit (140),

wherein, for each of the two-dimensional regions in the input image, the cost function holding unit (150) is configured to hold only the cost function, whose corresponding depth value is most appropriate, in association with the most appropriate corresponding depth value, and

wherein the resolution setting unit (120) is further configured to set, as an additional depth value, a new depth value which indicates a depth position that is near the first object and different from the depth positions each indicated in a corresponding one of the initial depth values, and

for each of the two-dimensional regions in the input image, the depth information generating unit (140) is further configured to:

(a) calculate a cost function which corresponds to the additional depth value;
(b) compare the calculated cost function with the cost function held in the cost function holding unit (150); and
(c) (i) in the case where the calculated cost function is more appropriate than the cost function held in the cost function holding unit, determine that the additional depth value is a depth value for a corresponding one of the two-dimensional regions, and replace the cost function held in the cost function holding unit (150) with the calculated cost function and (ii) in the case where the cost function held in the cost function holding unit (150) is more appropriate than the calculated cost function, determine that a depth value included in the set depth values and corresponding to the cost function held in the cost function holding unit (150) is a depth value for a corresponding one of the two-dimensional regions.

## Patentansprüche

1. Erfassungsvorrichtung für dreidimensionale Abbildungen, die Tiefendaten generiert, die für die Erzeugung eines dreidimensionalen Bildes aus einer Eingabeabbildung benutzt werden, wobei die Erfassungsvorrichtung für dreidimensionale Abbildungen folgendes umfasst:

eine Erfassungseinheit (130), die so konfiguriert ist, dass sie die Eingabeabbildung bei der Erfassung erzielt;
eine Objektbezeichnungseinheit (110), die so konfiguriert ist, dass sie ein erstes Objekt in der von der Erfassungseinheit (130) erzielten Eingabeabbildung bezeichnet;
eine Auflösungseinstellungseinheit (120), die so konfiguriert ist, dass sie Tiefenwerte einstellt, von denen jeder eine andere Tiefenposition als ursprüngliche Tiefenwerte darstellt, so dass die Tiefenauflösung in einer Richtung parallel zu einer Tiefenrichtung der Eingabeabbildung in der Nähe des ersten Objekts höher ist als die Tiefenauflösung in Entfernung vom ersten Objekt, wobei das erste Objekt von der Objektbezeichnungseinheit (110) bezeichnet wird;
eine Tiefendaten-Erzeugungseinheit (140), die so konfiguriert ist, dass sie die der Eingabeabbildung entsprechenden Tiefendaten erzeugt, indem sie für jeden der zweidimensionalen Bereiche in der Eingabeabbildung einen Tiefenwert unter den von der Auflösungseinstellungseinheit eingestellten Tiefenwerten bestimmt, der eine Tiefenposition angibt, die einem der zweidimensionalen Bereiche entspricht;
eine Anzeigeeinheit (170), die so konfiguriert ist, dass sie ein Bild mit stereoskopischem Effekt anzeigt, dessen stereoskopischer Effekt beobachtet wird, wenn die dreidimensionale Abbildung auf der Grundlage der Eingabeabbildung und der Tiefendaten erzeugt wird; und
eine Anpassungseinheit für den stereoskopischen Effekt (180), die so konfiguriert ist, dass sie eine Ebene des stereoskopischen Effekts gemäß einer Weisung eines Benutzers anpasst,

wobei im Fall, dass die Anpassungseinheit für den stereoskopischen Effekt (180) eine Verstärkung des stereoskopischen Effekts einstellt, die Auflösungseinstellungseinheit (120) ferner so konfiguriert ist, dass sie als zusätzlichen Tiefenwert einen neuen Tiefenwert einstellt, der eine Tiefenposition angibt, die in der Nähe des ersten Objekts liegt und sich von den Tiefenpositionen unterscheidet, die jeweils in einem entsprechenden der ursprünglichen Tiefenwerte angegeben sind, und

die Tiefendaten-Erzeugungseinheit (140) so konfiguriert ist, dass sie für jeden der zweidimensionalen Bereiche in der Eingabeabbildung einen Tiefenwert unter den ursprünglichen Tiefenwerten und dem zusätzlichen Tiefenwert bestimmt,

wobei für jeden der zweidimensionalen Bereiche in der Eingabeabbildung die Tiefendaten-Erzeugungseinheit (140) so konfiguriert ist, dass sie:

(a) eine Kostenfunktion berechnet, die einem Wert eines Pixels eines der von der Auflösungseinstellungseinheit eingestellten Tiefenwerts entspricht, und die Angemessenheit des entsprechenden Tiefenwerts angibt, wobei die Kostenfunktion (i) anhand einer Punktspreizfunktion (PSF) berechnet wird oder (ii) ein Kontrast eines entsprechenden der beiden zweidimensionalen Bereiche angegeben wird; und

(b) als Tiefenwert für einen entsprechenden der beiden zweidimensionalen Bereiche einen solchen Tiefenwert bestimmt, der einer Kostenfunktion entspricht, deren entsprechender Tiefenwert am angemessensten ist,

die dreidimensionale Bilderfassungsvorrichtung ferner eine Kostenfunktions-Bewahrungseinheit (150) umfasst, die so konfiguriert ist, dass sie die von der Tiefendaten-Erzeugungseinheit (140) berechnete Kostenfunktion bewahrt, wobei für jeden der zweidimensionalen Bereiche in der Eingabeabbildung die Kostenfunktions-Bewahrungseinheit (150) so konfiguriert ist, dass sie nur die Kostenfunktion bewahrt, deren entsprechender Tiefenwert in Verbindung mit dem angemessensten entsprechenden Tiefenwert am angemessensten ist, und

wobei die Auflösungseinstellungseinheit (120) ferner so konfiguriert ist, dass sie als zusätzlichen Tiefenwert einen neuen Tiefenwert einstellt, der eine Tiefenposition angibt, die in der Nähe des ersten Objekts liegt und sich von den Tiefenpositionen unterscheidet, die jeweils in einem entsprechenden der ursprünglichen Tiefenwerte angegeben sind, und

für jeden der zweidimensionalen Bereiche in der Eingabeabbildung die Tiefendaten-Erzeugungseinheit (140) ferner so konfiguriert ist, dass sie:

(a) eine Kostenfunktion berechnet, die dem zusätzlichen Tiefenwert entspricht;

(b) die berechnete Kostenfunktion mit der Kostenfunktion vergleicht, die in der Kostenfunktions-Bewahrungseinheit (150) bewahrt wird; und

(c) (i) im Fall, dass die berechnete Kostenfunktion angemessener ist als die in der Kostenfunktions-Bewahrungseinheit bewahrte Kostenfunktion, bestimmt, dass der zusätzliche Tiefenwert ein Tiefenwert für einen entsprechenden der zweidimensionalen Bereiche ist, und die in der Kostenfunktions-Bewahrungseinheit (150) bewahrte Kostenfunktion durch die berechnete Kostenfunktion ersetzt und (ii) im Fall, dass die in der Kostenfunktions-Bewahrungseinheit (150) bewahrte Kostenfunktion angemessener ist als die berechnete Kostenfunktion, bestimmt, dass ein Tiefenwert, der in den eingestellten Tiefenwerten inbegriffen ist und in der Kostenfunktions-Bewahrungseinheit (150) bewahrt wird, ein Tiefenwert für einen entsprechenden der zweidimensionalen Bereiche ist.

2. Erfassungsvorrichtung für dreidimensionale Abbildungen nach Anspruch 1,
wobei die Auflösungseinstellungseinheit so konfiguriert ist, dass sie die ursprünglichen Tiefenwerte einstellt, indem sie zumindest eine der Tiefenpositionen in der Nähe einer Tiefenposition des ersten von der Bezeichnungseinheit bezeichneten Objekts verlagert.

3. Erfassungsvorrichtung für dreidimensionale Abbildungen nach Anspruch 1, die ferner folgendes umfasst
eine Erzeugungsvorrichtung für dreidimensionale Abbildungen, die so konfiguriert ist, dass sie die dreidimensionale Abbildung ausgehend von der Eingabeabbildung auf der Grundlage der Eingabeabbildung und der Tiefendaten erzeugt,
wobei die Anzeigeeinheit so konfiguriert ist, dass die dreidimensionale Abbildung als ein Bild mit stereoskopischem Effekt angezeigt wird.

4. Erfassungsvorrichtung für dreidimensionale Abbildungen nach einem der Ansprüche 1 bis 3,
wobei die Bezeichnungseinheit ferner so konfiguriert ist, dass sie zusätzlich ein zweites Objekt bezeichnet, das sich vom ersten Objekt unterscheidet und in der von der Erfassungsvorrichtung erzielten Eingabeabbildung eingeschlossen ist,
die Auflösungseinstellungseinheit ferner so konfiguriert ist, dass sie als zusätzlichen Tiefenwert einen neuen Tiefenwert einstellt, der eine Tiefenposition angibt, die in der Nähe des zweiten Objekts liegt und sich von den Tiefenpositionen unterscheidet, die jeweils in einem entsprechenden der ursprünglichen Tiefenwerte angegeben sind, und
die Tiefendaten-Erzeugungseinheit so konfiguriert ist, dass sie für jeden der zweidimensionalen Bereiche in der Eingabeabbildung einen Tiefenwert unter den ursprünglichen Tiefenwerten und dem zusätzlichen Tiefenwert bestimmt.

5. Erfassungsvorrichtung für dreidimensionale Abbildungen nach einem der Ansprüche 1 bis 3,
wobei die Bezeichnungseinheit ferner so konfiguriert ist, dass sie zusätzlich ein zweites Objekt bezeichnet, das sich vom ersten Objekt unterscheidet und in der von der Erfassungsvorrichtung erzielten Eingabeabbildung eingeschlossen ist, und
die Auflösungseinstellungseinheit so konfiguriert ist, dass sie die ursprünglichen Tiefenwerte aktualisiert, indem sie zumindest eine der Tiefenpositionen in der Nähe einer Tiefenposition des zweiten von der Bezeichnungseinheit bezeichneten Objekts verlagert, die jeweils in einem entsprechenden der ursprünglichen Tiefenwerte angegeben sind.

6. Erfassungsvorrichtung für dreidimensionale Abbildungen nach Anspruch 1,
wobei für jeden der zweidimensionalen Bereiche in der Eingabeabbildung die Kostenfunktions-Bewahrungseinheit (150) so konfiguriert ist, dass sie die Kostenfunktion bewahrt, die von der Tiefendaten-Erzeugungseinheit (140) in Verbindung mit einem der Tiefenwerte berechnet wird.

7. Erfassungsvorrichtung für dreidimensionale Abbildungen nach Anspruch 6,
wobei die Auflösungseinstellungseinheit (120) ferner so konfiguriert ist, dass sie als zusätzlichen Tiefenwert einen neuen Tiefenwert einstellt, der eine Tiefenposition angibt, die in der Nähe des ersten Objekts liegt und sich von den Tiefenpositionen unterscheidet, die jeweils in einem entsprechenden der ursprünglichen Tiefenwerte angegeben sind, und

für jeden der zweidimensionalen Bereiche im Eingabebild die Tiefendaten-Erzeugungseinheit (140) ferner so konfiguriert ist, dass sie:

(a) eine Kostenfunktion berechnet, die dem zusätzlichen Tiefenwert entspricht; und
(b) die berechnete Kostenfunktion in der Kostenfunktions-Bewahrungseinheit (150) in Verbindung mit dem zusätzlichen Tiefenwert speichert.

8. Erfassungsvorrichtung für dreidimensionale Abbildungen nach Anspruch 1, wobei
die Anzeigeeinheit (170) ferner so konfiguriert ist, dass sie die Eingabeabbildung so anzeigt, dass das von der Bezeichnungseinheit bezeichnete erste Objekt verstärkt wird.

9. Erfassungsverfahren für dreidimensionale Abbildungen, das Tiefendaten generiert, die für die Erzeugung eines dreidimensionalen Bildes aus einer Eingabeabbildung benutzt werden, wobei das Erfassungsverfahren für dreidimensionale Abbildungen folgendes umfasst:

Erzielen der Eingabeabbildung bei der Erfassung;
Bezeichnen eines Objekts in der Eingabeabbildung, die beim Erzielen erzielt wurde;
Einstellen von Tiefenwerten, von denen jeder eine andere Tiefenposition als ursprüngliche Tiefenwerte darstellt, so dass die Tiefenauflösung in einer Richtung parallel zu einer Tiefenrichtung der Eingabeabbildung in der Nähe des Objekts höher ist als die Tiefenauflösung in Entfernung vom Objekt, wobei das Objekt beim Bezeichnen bezeichnet wird;
Erzeugen der der Eingabeabbildung entsprechenden Tiefendaten durch Bestimmen für jeden der zweidimensionalen Bereiche in der Eingabeabbildung eines Tiefenwerts unter den beim Einstellen eingestellten Tiefenwerten, der eine Tiefenposition angibt, die einem der zweidimensionalen Bereiche entspricht;
Anzeigen eines Bildes mit stereoskopischem Effekt, das einen stereoskopischen Effekt anzeigt, der beobachtet wird, wenn die dreidimensionale Abbildung auf der Grundlage der Eingabeabbildung und der Tiefendaten erzeugt wird; und
Anpassen einer Ebene des stereoskopischen Effekts auf der Grundlage einer Weisung eines Benutzers,

wobei in dem Fall, in dem der stereoskopische Effekt, der verstärkt werden soll, beim Anpassen eingestellt wird, ferner beim Einstellen ein neuer Tiefenwert als zusätzlicher Tiefenwert eingestellt wird, der neue Tiefenwert eine Tiefenposition angibt, die in der Nähe des ersten Objekts liegt und sich von den Tiefenpositionen unterscheidet, die jeweils in einem entsprechenden der ursprünglichen Tiefenwerte angegeben sind, und
beim Erzeugen für jeden der zweidimensionalen Bereiche in der Eingabeabbildung ein Tiefenwert von unter den ursprünglichen Tiefenwerten und dem zusätzlichen Tiefenwert bestimmt wird,
wobei für jeden der zweidimensionalen Bereiche in der Eingabeabbildung

(a) Berechnen einer Kostenfunktion, die einem Wert eines Pixels eines der von der Auflösungseinstellungseinheit eingestellten Tiefenwerte entspricht, und Angeben der Angemessenheit des entsprechenden Tiefenwerts, wobei die Kostenfunktion (i) anhand einer Punktspreizfunktion (PSF) berechnet wird oder (ii) Angeben eines Kontrasts eines entsprechenden der beiden zweidimensionalen Bereiche; und
(b) Bestimmen eines Tiefenwerts als ein Tiefenwert für einen entsprechenden der beiden zweidimensionalen Bereiche, der einer Kostenfunktion entspricht, deren entsprechender Tiefenwert am angemessensten ist,

Bewahren nur der berechneten Kostenfunktion, deren entsprechender Tiefenwert in Verbindung mit dem angemessensten entsprechenden Tiefenwert am angemessensten ist, und

Einstellen eines neuen Tiefenwerts als zusätzlichen Tiefenwert, der eine Tiefenposition angibt, die in der Nähe des ersten Objekts liegt und sich von den Tiefenpositionen unterscheidet, die jeweils in einem entsprechenden der ursprünglichen Tiefenwerte angegeben sind, und

für jeden der zweidimensionalen Bereiche in der Eingabeabbildung,

(a) Berechnen einer Kostenfunktion berechnet, die dem zusätzlichen Tiefenwert entspricht;

(b) Vergleichen der berechneten Kostenfunktion mit der Kostenfunktion, die in der Kostenfunktions-Bewahrungseinheit (150) bewahrt wird; und

(c) (i) im Fall, dass die berechnete Kostenfunktion angemessener ist als die bewahrte Kostenfunktion, Bestimmen, dass der zusätzliche Tiefenwert ein Tiefenwert für einen entsprechenden der zweidimensionalen Bereiche ist und Ersetzen der bewahrten Kostenfunktion durch die berechnete Kostenfunktion und (ii) im Fall, dass die bewahrte Kostenfunktion angemessener ist als die berechnete Kostenfunktion, Bestimmen, dass ein Tiefenwert, der in den eingestellten Tiefenwerten inbegriffen ist und der bewahrten Kostenfunktion entspricht, ein Tiefenwert für einen entsprechenden der zweidimensionalen Bereiche ist.

10. Programm, das einen Rechner dazu veranlasst, das Erfassungsverfahren für dreidimensionale Abbildungen nach Anspruch 9 durchzuführen.

11. Integrierte Schaltung, die Tiefendaten generiert, die für die Erzeugung eines dreidimensionalen Bildes aus einer Eingabeabbildung benutzt werden, wobei die integrierte Schaltung folgendes umfasst:

eine Erfassungseinheit, die so konfiguriert ist, dass sie die Eingabeabbildung bei der Erfassung erzielt;

eine Bezeichnungseinheit, die so konfiguriert ist, dass sie ein erstes Objekt in der von der Erfassungseinheit erzielten Eingabeabbildung bezeichnet;

eine Auflösungseinstellungseinheit, die so konfiguriert ist, dass sie Tiefenwerte einstellt, von denen jeder eine andere Tiefenposition als ursprüngliche Tiefenwerte darstellt, so dass die Tiefenauflösung in einer Richtung parallel zu einer Tiefenrichtung der Eingabeabbildung in der Nähe des ersten Objekts höher ist als die Tiefenauflösung in Entfernung vom ersten Objekt, wobei das erste Objekt von der Bezeichnungseinheit bezeichnet wird;

eine Tiefendaten-Erzeugungseinheit, die so konfiguriert ist, dass sie die der Eingabeabbildung entsprechenden Tiefendaten erzeugt, indem sie für jeden der zweidimensionalen Bereiche in der Eingabeabbildung einen Tiefenwert unter den von der Auflösungseinstellungseinheit eingestellten Tiefenwerten bestimmt, der eine Tiefenposition angibt, die einem der zweidimensionalen Bereiche entspricht;

eine Anzeigeeinheit, die so konfiguriert ist, dass sie ein Bild mit stereoskopischem Effekt anzeigt, dessen stereoskopischer Effekt beobachtet wird, wenn die dreidimensionale Abbildung auf der Grundlage der Eingabeabbildung und der Tiefendaten erzeugt wird; und

eine Anpassungseinheit für den stereoskopischen Effekt, die so konfiguriert ist, dass sie eine Ebene des stereoskopischen Effekts gemäß einer Weisung eines Benutzers anpasst,

wobei im Fall, dass die Anpassungseinheit für den stereoskopischen Effekt eine Verstärkung des stereoskopischen Effekts einstellt, die Auflösungseinstellungseinheit ferner so konfiguriert ist, dass sie als zusätzlichen Tiefenwert einen neuen Tiefenwert einstellt, der eine Tiefenposition angibt, die in der Nähe des ersten Objekts liegt und sich von den Tiefenpositionen unterscheidet, die jeweils in einem entsprechenden der ursprünglichen Tiefenwerte angegeben sind, und

die Tiefendaten-Erzeugungseinheit so konfiguriert ist, dass sie für jeden der zweidimensionalen Bereiche in der Eingabeabbildung einen Tiefenwert unter den ursprünglichen Tiefenwerten und dem zusätzlichen Tiefenwert bestimmt,

wobei für jeden der zweidimensionalen Bereiche in der Eingabeabbildung die Tiefendaten-Erzeugungseinheit (140) so konfiguriert ist, dass sie:

(a) eine Kostenfunktion berechnet, die einem Wert eines Pixels eines der von der Auflösungseinstellungseinheit eingestellten Tiefenwerts entspricht, und die Angemessenheit des entsprechenden Tiefenwerts angibt, wobei die Kostenfunktion (i) anhand einer Punktspreizfunktion (PSF) berechnet wird oder (ii) ein Kontrast eines entsprechenden der beiden zweidimensionalen Bereiche angegeben wird; und

(b) als Tiefenwert für einen entsprechenden der beiden zweidimensionalen Bereiche einen solchen Tiefenwert bestimmt, der einer Kostenfunktion entspricht, deren entsprechender Tiefenwert am angemessensten ist,

die dreidimensionale Bilderfassungsvorrichtung ferner eine Kostenfunktions-Bewahrungseinheit (150) umfasst, die so konfiguriert ist, dass sie die von der Tiefendaten-Erzeugungseinheit (140) berechnete Kostenfunktion bewahrt, wobei für jeden der zweidimensionalen Bereiche im Eingabebild die Kostenfunktions-Bewahrungseinheit (150) so konfiguriert ist, dass sie nur die Kostenfunktion bewahrt, deren entsprechender Tiefenwert in Verbindung mit dem angemessensten entsprechenden Tiefenwert am angemessensten ist, und

wobei die Auflösungseinstellungseinheit (120) ferner so konfiguriert ist, dass sie als zusätzlichen Tiefenwert einen neuen Tiefenwert einstellt, der eine Tiefenposition angibt, die in der Nähe des ersten Objekts liegt und sich von den Tiefenpositionen unterscheidet, die jeweils in einem entsprechenden der ursprünglichen Tiefenwerte angegeben sind, und

für jeden der zweidimensionalen Bereiche im Eingabebild die Tiefendaten-Erzeugungseinheit (140) ferner so konfiguriert ist, dass sie:

(a) eine Kostenfunktion berechnet, die dem zusätzlichen Tiefenwert entspricht;
(b) die berechnete Kostenfunktion mit der Kostenfunktion vergleicht, die in der Kostenfunktions-Bewahrungseinheit (150) bewahrt wird; und
(c) (i) im Fall, dass die berechnete Kostenfunktion angemessener ist als die in der Kostenfunktions-Bewahrungseinheit bewahrte Kostenfunktion, bestimmt, dass der zusätzliche Tiefenwert ein Tiefenwert für einen entsprechenden der zweidimensionalen Bereiche ist, und die in der Kostenfunktions-Bewahrungseinheit (150) bewahrte Kostenfunktion durch die berechnete Kostenfunktion ersetzt und (ii) im Fall, dass die in der Kostenfunktions-Bewahrungseinheit (150) bewahrte Kostenfunktion angemessener ist als die berechnete Kostenfunktion, bestimmt, dass ein Tiefenwert, der in den eingestellten Tiefenwerten inbegriffen ist und in der Kostenfunktions-Bewahrungseinheit (150) bewahrt wird, ein Tiefenwert für einen entsprechenden der zweidimensionalen Bereiche ist.

## Revendications

1. Appareil de capture d'une image tridimensionnelle qui produit une information de profondeur destinée à être utilisée pour produire une image tridimensionnelle à partir d'une image d'entrée, l'appareil de capture d'une image tridimensionnelle comprenant :

une unité de capture (130) configurée pour obtenir l'image d'entrée par la capture ;
une unité de conception d'objet (110) configurée pour concevoir un premier objet dans l'image d'entrée obtenue par l'unité de capture (130) ;
une unité de réglage de la résolution (120) configurée pour régler des valeurs de profondeur, chacune d'entre elles représente une position de profondeur différente, en tant que valeurs de profondeur initiales de sorte que, dans une direction parallèle à une direction de profondeur de l'image d'entrée, la résolution de profondeur proche du premier objet soit plus élevée que la résolution de profondeur positionnée à distance du premier objet, le premier objet étant conçu par l'unité de conception d'objet (110) ;
une unité de production d'une information de profondeur (140) configurée pour produire une information de profondeur correspondant à l'image d'entrée en déterminant, pour chacune des régions bidimensionnelles dans l'image d'entrée, une valeur de profondeur, parmi les valeurs de profondeur réglées par l'unité de réglage de la résolution, en indiquant une position de profondeur correspondant à l'une des régions bidimensionnelles ;
une unité d'affichage (170) configurée pour afficher une image à effet stéréoscopique montrant un effet stéréoscopique à observer lorsque l'image tridimensionnelle est produite sur la base de l'image d'entrée et de l'information de profondeur ; et
une unité d'ajustement d'effet stéréoscopique (180) configurée pour ajuster un niveau d'effet stéréoscopique sur la base d'une instruction d'un utilisateur,

dans lequel, dans un cas où l'unité d'ajustement d'un effet stéréoscopique (180) règle l'effet stéréoscopique à améliorer, l'unité de réglage de la résolution (120) est en outre configurée pour régler, en tant que valeur de profondeur supplémentaire, une nouvelle valeur de profondeur qui indique une position de profondeur qui est proche du premier objet et différente des positions de profondeur indiquées chacune dans l'une correspondante des valeurs de profondeur initiales, et

l'unité de production d'une information de profondeur (140) est configurée pour déterminer, pour chacune des régions bidimensionnelles dans l'image d'entrée, une valeur de profondeur parmi les valeurs de profondeur initiales et les valeurs de profondeur supplémentaires,

dans lequel, pour chacune des régions bidimensionnelles dans l'image d'entrée, l'unité de production d'une information de profondeur (140) est configurée pour :

> a) calculer une fonction de coût qui correspond à une valeur d'un pixel d'une des valeurs de profondeur réglées par l'unité de réglage de la résolution, et indique le caractère approprié de la valeur de profondeur correspondante, la fonction de coût (i) étant calculée en utilisant une fonction d'étalement du point (PSF) ou (ii) en indiquant un contraste de l'une correspondante des régions bidimensionnelles ; et
> b) déterminer, en tant que valeur de profondeur pour l'une correspondante des régions bidimensionnelles, une valeur de profondeur correspondant à une fonction de coût dont la valeur de profondeur correspondante est la plus appropriée, l'appareil de capture d'une image tridimensionnelle comprenant en outre une unité de maintien de fonction de coût (150) configurée pour maintenir la fonction de coût calculée par l'unité de production d'une information de profondeur (140),

dans lequel, pour chacune des régions bidimensionnelles dans l'image d'entrée, l'unité de maintien de fonction de coût (150) est configurée pour maintenir uniquement la fonction de coût, dont la valeur de profondeur correspondante est la plus appropriée, en association avec la valeur de profondeur correspondante la plus appropriée, et

dans lequel l'unité de réglage de la résolution (120) est en outre configurée pour régler, en tant que valeur de profondeur supplémentaire, une nouvelle valeur de profondeur qui indique une position de profondeur qui est proche du premier objet et différente des positions de profondeur indiquées dans l'une correspondante des valeurs de profondeur initiales, et

pour chacune des régions bidimensionnelles dans l'image d'entrée, l'unité de production d'une information de profondeur (140) est en outre configurée pour :

> a) calculer une fonction de coût qui correspond à la valeur de profondeur supplémentaire ;
> b) comparer la fonction de coût calculée avec la fonction de coût maintenue dans l'unité de maintien de fonction de coût (150) ; et
> c) (i) dans un cas où la fonction de coût calculée est plus appropriée que la fonction de coût maintenue dans l'unité de maintien de fonction de coût, déterminer que la valeur de profondeur supplémentaire est une valeur de profondeur pour l'une correspondante des régions bidimensionnelles, et remplacer la fonction de coût maintenue dans l'unité de maintien de fonction de coût (150) par la fonction de coût calculée, et (ii) dans le cas où la fonction de coût maintenue dans l'unité de maintien de fonction de coût (150) est plus appropriée que la fonction de coût calculée, déterminer qu'une valeur de profondeur comprise dans les valeurs de profondeur réglées et correspondant à la fonction de coût maintenue dans l'unité de maintien de fonction de coût (150) est une valeur de profondeur pour l'une correspondante des régions bidimensionnelles.

2. Appareil de capture d'une image tridimensionnelle selon la revendication 1, dans lequel l'unité de réglage de la résolution est configurée pour régler les valeurs de profondeur initiales en déplaçant au moins l'une des positions de profondeur proches d'une position de profondeur du premier objet conçu par l'unité de conception.

3. Appareil de capture d'une image tridimensionnelle selon la revendication 1, comprenant en outre une unité de production d'une image tridimensionnelle configurée pour produire une image tridimensionnelle de l'image d'entrée, sur la base de l'image d'entrée et de l'information de profondeur, dans lequel l'unité d'affichage est configurée pour afficher une image tridimensionnelle en tant qu'image à effet stéréoscopique.

4. Appareil de capture d'une image tridimensionnelle selon l'une quelconque des revendications 1 à 3, dans lequel l'unité de conception est en outre configurée pour concevoir en supplément un second objet qui est différent du premier objet et compris dans l'image d'entrée obtenue par l'unité de capture, l'unité de réglage de la résolution est en outre configurée pour régler, en tant que valeur de profondeur supplémentaire, une nouvelle valeur de profondeur qui indique une position de profondeur qui est proche du second objet et différente des positions de profondeur indiquées dans l'une correspondante des valeurs de profondeur initiales, et l'unité de production d'une information de profondeur est configurée pour déterminer, pour chacune des régions bidimensionnelles dans l'image d'entrée, une valeur de profondeur parmi les valeurs de profondeur initiales et les valeurs de profondeur supplémentaires.

5. Appareil de capture d'une image tridimensionnelle selon l'une quelconque des revendications 1 à 3, dans lequel l'unité de conception est en outre configurée pour concevoir en supplément un second objet qui est différent du premier objet et compris dans l'image d'entrée obtenue par l'unité de capture, et

l'unité de réglage de la résolution est configurée pour actualiser les valeurs de profondeur initiales en déplaçant au moins l'une des positions de profondeur proches d'une position de profondeur du second objet conçu en supplément par l'unité de conception, chacune des positions de profondeur étant indiquée dans l'une correspondante des valeurs de profondeur initiales.

6. Appareil de capture d'une image tridimensionnelle selon la revendication 1,
dans lequel, pour chacune des régions bidimensionnelles dans l'image d'entrée, l'unité de maintien de fonction de coût (150) est configurée pour maintenir la fonction de coût, calculée par l'unité de production d'une information de profondeur (140), en association avec l'une des valeurs de profondeur.

7. Appareil de capture d'une image tridimensionnelle selon la revendication 6,
dans lequel l'unité de réglage de la résolution (120) est en outre configurée pour régler, en tant que valeur de profondeur supplémentaire, une nouvelle valeur de profondeur qui indique une position de profondeur qui est proche du premier objet et différente des positions de profondeur indiquées chacune dans l'une correspondante des valeurs de profondeur initiales, et
pour chacune des régions bidimensionnelles dans l'image d'entrée, l'unité de production d'une information de profondeur (140) est en outre configurée pour :

a) calculer une fonction de coût qui correspond à la valeur de profondeur supplémentaire ; et
b) stocker la fonction de coût calculée dans l'unité de maintien de fonction de coût (150) en association avec la valeur de profondeur supplémentaire.

8. Appareil de capture d'une image tridimensionnelle selon la revendication 1, dans lequel
l'unité d'affichage (170) est en outre configurée pour afficher l'image d'entrée de sorte que le premier objet conçu par l'unité de conception d'objet (110) soit amélioré.

9. Procédé de capture d'une image tridimensionnelle pour produire une information de profondeur destinée à être utilisée pour produire une image tridimensionnelle à partir d'une image d'entrée, le procédé de capture d'une image tridimensionnelle comprenant :

l'obtention d'une image d'entrée par la capture ;
la conception d'un objet dans l'image d'entrée obtenue par l'obtention ;
le réglage des valeurs de profondeur, chacune d'entre elles représente une position de profondeur différente, en tant que valeurs de profondeur initiales de sorte que, dans une direction parallèle à une direction de profondeur de l'image d'entrée, la résolution de profondeur proche de l'objet soit plus élevée que la résolution de profondeur positionnée à distance de l'objet, l'objet étant conçu par la conception ;
la production d'une information de profondeur correspondant à l'image d'entrée en déterminant, pour chacune des régions bidimensionnelles dans l'image d'entrée, une valeur de profondeur, parmi les valeurs de profondeur réglées par le réglage, en indiquant une position de profondeur correspondant à l'une des régions bidimensionnelles ;
l'affichage d'une image à effet stéréoscopique montrant un effet stéréoscopique à observer lorsque l'image tridimensionnelle est produite sur la base de l'image d'entrée et de l'information de profondeur ; et
l'ajustement d'un niveau de l'effet stéréoscopique sur la base d'une instruction d'un utilisateur,

dans lequel, dans le cas où l'effet stéréoscopique à améliorer est réglé par l'ajustement, une nouvelle valeur de profondeur est en outre réglée en tant que valeur de profondeur supplémentaire dans le réglage, la nouvelle valeur de profondeur indiquant une position de profondeur qui est proche du premier objet et différente des positions de profondeur indiquées chacune dans l'une correspondante des valeurs de profondeur initiales, et
par la production, une valeur de profondeur est déterminée, pour chacune des régions bidimensionnelles dans l'image d'entrée, parmi les valeurs de profondeur initiales et la valeur de profondeur supplémentaire,
dans lequel, pour chacune des régions bidimensionnelles dans l'image d'entrée,

(a) le calcul d'une fonction de coût qui correspond à une valeur d'un pixel d'une des valeurs de profondeur réglées par l'unité de réglage de la résolution, et indique le caractère approprié de la valeur de profondeur correspondante, la fonction de coût (i) étant calculée en utilisant une fonction d'étalement du point (PSF) ou (ii) en indiquant un contraste de l'une correspondante des régions bidimensionnelles ; et
b) la détermination, en tant que valeur de profondeur pour l'une correspondante des régions bidimensionnelles, d'une valeur de profondeur correspondant à une fonction de coût dont la valeur de profondeur correspondante est la plus appropriée, le maintien d'uniquement la fonction de coût calculée, dont la valeur de profondeur correspondante est la plus appropriée, en association avec la valeur de profondeur correspondante la plus appropriée, et

le réglage, en tant que valeur de profondeur supplémentaire, d'une nouvelle valeur de profondeur qui indique une position de profondeur qui est proche du premier objet et différente des positions de profondeur indiquées chacune dans l'une correspondante des valeurs de profondeur initiales, et

pour chacune des régions bidimensionnelles dans l'image d'entrée,

a) le calcul d'une fonction de coût qui correspond à la valeur de profondeur supplémentaire ;

b) la comparaison de la fonction de coût calculée avec la fonction de coût maintenue dans l'unité de maintien de fonction de coût (150) ; et

c) (i) dans le cas où la fonction de coût calculée est plus appropriée que la fonction de coût maintenue, déterminer que la valeur de profondeur supplémentaire est une valeur de profondeur pour l'une correspondante des régions bidimensionnelles, et remplacer la fonction de coût maintenue par la fonction de coût calculée, et (ii) dans le cas où la fonction de coût maintenue est plus appropriée que la fonction de coût calculée, déterminer qu'une valeur de profondeur comprise dans les valeurs de profondeur réglées et correspondant à la fonction de coût maintenue est une valeur de profondeur pour l'une correspondante des régions bidimensionnelles.

10. Programme qui amène un ordinateur à exécuter le procédé de capture d'une image tridimensionnelle selon la revendication 9.

11. Circuit intégré qui produit une information de profondeur destinée à être utilisée pour produire une image tridimensionnelle à partir d'une image d'entrée, le circuit intégré comprenant :

une unité de capture configurée pour obtenir l'image d'entrée par la capture ;

une unité de conception configurée pour concevoir un premier objet dans l'image d'entrée obtenue par l'unité de capture ;

une unité de réglage de la résolution configurée pour régler des valeurs de profondeur, chacune d'entre elles représente une position de profondeur différente, en tant que valeurs de profondeur initiales de sorte que, dans une direction parallèle à une direction de profondeur de l'image d'entrée, la résolution de profondeur proche du premier objet soit plus élevée que la résolution de profondeur positionnée à distance du premier objet, le premier objet étant conçu par l'unité de conception ;

une unité de production d'une information de profondeur configurée pour produire l'information de profondeur correspondant à l'image d'entrée en déterminant, pour chacune des régions bidimensionnelles dans l'image d'entrée, une valeur de profondeur, parmi les valeurs de profondeur réglées par l'unité de réglage de la résolution, en indiquant une position de profondeur correspondant à l'une des régions bidimensionnelles ;

une unité d'affichage configurée pour afficher une image à effet stéréoscopique montrant un effet stéréoscopique à observer lorsque l'image tridimensionnelle est produite sur la base de l'image d'entrée et de l'information de profondeur ; et

une unité d'ajustement d'effet stéréoscopique configurée pour ajuster un niveau d'effet stéréoscopique sur la base d'une instruction d'un utilisateur,

dans lequel, dans le cas où l'unité d'ajustement d'un effet stéréoscopique règle l'effet stéréoscopique à améliorer, l'unité de réglage de la résolution est en outre configurée pour régler, en tant que valeur de profondeur supplémentaire, une nouvelle valeur de profondeur qui indique une position de profondeur qui est proche du premier objet et différente des positions de profondeur indiquées chacune dans l'une correspondante des valeurs de profondeur initiales, et

l'unité de production d'une information de profondeur est configurée pour déterminer, pour chacune des régions bidimensionnelles dans l'image d'entrée, une valeur de profondeur parmi les valeurs de profondeur initiales et les valeurs de profondeur supplémentaires,

dans lequel, pour chacune des régions bidimensionnelles dans l'image d'entrée, l'unité de production d'une information de profondeur (140) est configurée pour :

a) calculer une fonction de coût qui correspond à une valeur d'un pixel d'une des valeurs de profondeur réglées par l'unité de réglage de la résolution, et indique le caractère approprié de la valeur de profondeur correspondante, la fonction de coût (i) étant calculée en utilisant une fonction d'étalement du point (PSF) ou (ii) en indiquant un contraste de l'une correspondante des régions bidimensionnelles ; et

b) déterminer, en tant que valeur de profondeur pour l'une correspondante des régions bidimensionnelles, une valeur de profondeur correspondant à une fonction de coût dont la valeur de profondeur correspondante est la plus appropriée, l'appareil de capture d'une image tridimensionnelle comprenant en outre une unité de maintien de fonction de coût (150) configurée pour maintenir la fonction de coût calculée par l'unité de production d'une information de profondeur (140),

dans lequel, pour chacune des régions bidimensionnelles dans l'image d'entrée, l'unité de maintien de fonction de coût (150) est configurée pour maintenir uniquement la fonction de coût, dont la valeur de profondeur correspondante est la plus appropriée, en association avec la valeur de profondeur correspondante la plus appropriée, et

dans lequel l'unité de réglage de la résolution (120) est en outre configurée pour régler, en tant que valeur de profondeur supplémentaire, une nouvelle valeur de profondeur qui indique une position de profondeur qui est proche du premier objet et différente des positions de profondeur indiquées dans l'une correspondante des valeurs de profondeur initiales, et

pour chacune des régions bidimensionnelles dans l'image d'entrée, l'unité de production d'une information de profondeur (140) est en outre configurée pour :

a) calculer une fonction de coût qui correspond à la valeur de profondeur supplémentaire ;

b) comparer la fonction de coût calculée avec la fonction de coût maintenue dans l'unité de maintien de fonction de coût (150) ; et

c) (i) dans le cas où la fonction de coût calculée est plus appropriée que la fonction de coût maintenue dans l'unité de maintien de fonction de coût, déterminer que la valeur de profondeur supplémentaire est une valeur de profondeur pour l'une correspondante des régions bidimensionnelles, et remplacer la fonction de coût maintenue dans l'unité de maintien de fonction de coût (150) par la fonction de coût calculée, et (ii) dans le cas où la fonction de coût maintenue dans l'unité de maintien de fonction de coût (150) est plus appropriée que la fonction de coût calculée, déterminer qu'une valeur de profondeur comprise dans les valeurs de profondeur réglées et correspondant à la fonction de coût maintenue dans l'unité de maintien de fonction de coût (150) est une valeur de profondeur pour l'une correspondante des régions bidimensionnelles.

# FIG. 1

# FIG. 2

**Three-dimensional image capturing apparatus** (100)

- Object designating unit (110)
- Resolution setting unit (120)
- Capturing unit (130)
- Depth map generating unit (140)
- Cost function holding unit (150)
- Three-dimensional image generating unit (160)
- Display unit (170)
- Stereoscopic effect adjusting unit (180)
- Recording unit (190)

# FIG. 3

(a) Far $d_1$ $d_2$ $d_3$ $d_4$ $d_5$ $d_6$ $d_7$ $d_8$ $d_9$ $d_{10}$ Near

Target object

(b) Far $d_1$ $d_2$ $d_3$ $d_4$ $d_5$ $d_6$ $d_7$ $d_8$ $d_9$ $d_{10}$ Near

Target object

EP 2 670 148 B1

FIG. 4

(a) Far $d_1$ $d_2$ $d_3$ $d_4$ $d_5$ $d_6$ $d_7$ $d_8$ $d_9$ $d_{10}$ Near

Target object

(b) Far $d_1$ $d_2$ $d_3$ $d_4$ $d_5$ $d_{11}$ $d_6$ $d_{12}$ $d_7$ $d_8$ $d_9$ $d_{10}$ Near

Target object

# FIG. 5

(a) Far — $d_1$ ... $d_2$ ... $d_3$ ... $d_4$ ... $d_5$ $d_6$ $d_7$ ... $d_8$ ... $d_9$ ... $d_{10}$ — Near

Target object

(b) Far — $d_1$ ... $d_2$ $d_{11}$ $d_{12}$ $d_3$ ... $d_4$ ... $d_5$ $d_6$ $d_7$ ... $d_8$ ... $d_9$ ... $d_{10}$ — Near

Additional object          Target object

EP 2 670 148 B1

FIG. 6A

FIG. 6B

## FIG. 7A

## FIG. 7B

**FIG. 8**

Input image

| $A_{11}$ | $A_{12}$ | $A_{13}$ | $\cdots$ | $A_{1n}$ |
| $A_{21}$ | $A_{22}$ | $A_{23}$ | $\cdots$ | $A_{2n}$ |
| $A_{31}$ | $A_{32}$ | $A_{33}$ | $\cdots$ | $A_{3n}$ |
| $\cdots$ | $\cdots$ | $\cdots$ | | $\cdots$ |
| $A_{m1}$ | $A_{m2}$ | $A_{m3}$ | $\cdots$ | $A_{mn}$ |

Depth map

| $D_{11}$ | $D_{12}$ | $D_{13}$ | $\cdots$ | $D_{1n}$ |
| $D_{21}$ | $D_{22}$ | $D_{23}$ | $\cdots$ | $D_{2n}$ |
| $D_{31}$ | $D_{32}$ | $D_{33}$ | $\cdots$ | $D_{3n}$ |
| $\cdots$ | $\cdots$ | $\cdots$ | | $\cdots$ |
| $D_{m1}$ | $D_{m2}$ | $D_{m3}$ | $\cdots$ | $D_{mn}$ |

# FIG. 9

Far |———|———|———|———|———|———|———|———| Near
    1    2              i                  N

EP 2 670 148 B1

# FIG. 10

| | 1 | 2 | ····· | d | ····· | N |
|---|---|---|---|---|---|---|
| $A_{11}$ | $Cost[A_{11}][1]$ | $Cost[A_{11}][2]$ | ····· | $Cost[A_{11}][d]$ | ····· | $Cost[A_{11}][N]$ |
| $A_{12}$ | $Cost[A_{12}][1]$ | $Cost[A_{12}][2]$ | ····· | $Cost[A_{12}][d]$ | ····· | $Cost[A_{12}][N]$ |
| ⋮ | ⋮ | ⋮ | | ⋮ | | ⋮ |
| $A_{ij}$ | $Cost[A_{ij}][1]$ | $Cost[A_{ij}][2]$ | ····· | $Cost[A_{ij}][d]$ | ····· | $Cost[A_{ij}][N]$ |
| ⋮ | ⋮ | ⋮ | | ⋮ | | ⋮ |
| $A_{mn}$ | $Cost[A_{mn}][1]$ | $Cost[A_{mn}][2]$ | ····· | $Cost[A_{mn}][d]$ | ····· | $Cost[A_{mn}][N]$ |

FIG. 11

EP 2 670 148 B1

| Depth ID: Cost_min[$A_{11}$] | Depth ID: Cost_min[$A_{12}$] | $\cdots$ | Depth ID: Cost_min[$A_{1n}$] |
|---|---|---|---|
| Depth ID: Cost_min[$A_{21}$] | Depth ID: Cost_min[$A_{22}$] | $\cdots$ | Depth ID: Cost_min[$A_{2n}$] |
| $\vdots$ | $\vdots$ | $\ddots$ | $\vdots$ |
| Depth ID: Cost_min[$A_{m1}$] | Depth ID: Cost_min[$A_{m2}$] | $\cdots$ | Depth ID: Cost_min[$A_{mn}$] |

# FIG. 12

```
                    ┌─────────┐
                    │  Start  │
                    └────┬────┘
                         │
                         ▼
        ┌──────────────────────────┐  ⟋S110
        │     Designate object     │
        └─────────────┬────────────┘
                      │
                      ▼
        ┌──────────────────────────┐  ⟋S120
        │      Capture an object    │
        └─────────────┬────────────┘
                      │
                      ▼
        ┌──────────────────────────┐  ⟋S130
        │ │    Set resolution      │
        └─────────────┬────────────┘
                      │
                      ▼
        ┌──────────────────────────┐  ⟋S140
        │    Generate depth map     │
        └─────────────┬────────────┘
                      │
                      ▼
        ┌──────────────────────────┐  ⟋S150       ┌──────────────────────┐  ⟋S180
        │ Generate three-dimensional│             │ Adjust stereoscopic  │
        │ image                     │             │ effect               │
        └─────────────┬────────────┘             └──────────┬───────────┘
                      │                                      ▲
                      ▼                                      │
        ┌──────────────────────────┐  ⟋S160                 │
        │ Display three-dimensional │                       │
        │ image                     │                       │
        └─────────────┬────────────┘                       │
                      │   ⟋S170                             │
                      ▼                                      │
                 ╱──────────╲          Yes                  │
                ╱  Readjust   ╲────────────────────────────┘
                ╲ stereoscopic ╱
                 ╲  effect?   ╱
                  ╲─────┬────╱
                        │ No
                        ▼
        ┌──────────────────────────┐  ⟋S190
        │ Record three-dimensional  │
        │ image                     │
        └─────────────┬────────────┘
                      │
                      ▼
                 ┌─────────┐
                 │   End   │
                 └─────────┘
```

# FIG. 13

```
           ┌──────────┐
           │   Start   │
           └──────────┘
                │
                ▼
    ┌───────────────────────┐   S131
    │     Control focus      │
    └───────────────────────┘
                │
                ▼
    ┌───────────────────────┐   S132
    │ Obtain distance to object │
    └───────────────────────┘
                │
                ▼
    ┌───────────────────────┐   S133
    │ Determine depth resolution │
    └───────────────────────┘
                │
                ▼
           ┌──────────┐
           │   End    │
           └──────────┘
```

# FIG. 14

```
                    ┌─────────┐
                    │  Start  │
                    └────┬────┘
                         ▼
        ┌─────────────────────────┐
        │    Designate object     │ ─── S110
        └────────────┬────────────┘
                     ▼
        ┌─────────────────────────┐
        │     Capture an object   │ ─── S120
        └────────────┬────────────┘
                     ▼
        ┌─────────────────────────┐
        │     Set resolution      │ ─── S130
        └────────────┬────────────┘
                     ▼
        ┌─────────────────────────┐
        │    Generate depth map   │ ─── S140
        └────────────┬────────────┘
                     ▼
        ┌─────────────────────────┐              ┌──────────────────────┐
        │ Generate three-dimensional│ ─── S150    │ Adjust stereoscopic  │ ─── S180
        │ image                   │              │ effect               │
        └────────────┬────────────┘              └──────────┬───────────┘
                     ▼                                      ▲
        ┌─────────────────────────┐              ┌──────────────────────┐
        │ Display three-dimensional│ ─── S160    │ Additionally designate│ ─── S175
        │ image                   │              │ object               │
        └────────────┬────────────┘              └──────────┬───────────┘
                     ▼                                      ▲
                  ╱──────────╲ ─── S170                     │
                 ╱  Readjust   ╲        Yes                 │
                ╱ stereoscopic  ╲──────────────────────────┘
                ╲   effect?     ╱
                 ╲            ╱
                  ╲────┬─────╱
                       │ No
                       ▼
        ┌─────────────────────────┐
        │ Record three-dimensional│ ─── S190
        │ image                   │
        └────────────┬────────────┘
                     ▼
                ┌─────────┐
                │   End   │
                └─────────┘
```

# FIG. 15

```
                    ┌──────────┐
                    │  Start   │
                    └────┬─────┘
                         │
                         ▼
          ┌──────────────────────────┐  S110
          │     Designate object     │
          └──────────────┬───────────┘
                         │                                    │
                         ▼                                    │
          ┌──────────────────────────┐  S130                  │
          │      Set resolution      │                        │
          └──────────────┬───────────┘                        │
                         │                                    │
                         ▼                                    │
          ┌──────────────────────────┐  S120                  │
          │     Capture an object    │                        │
          └──────────────┬───────────┘                        │
                         │                                    │
                         ▼                                    │
          ┌──────────────────────────┐  S140                  │
          │    Generate depth map    │                        │
          └──────────────┬───────────┘                        │
                         │                                    │
                         ▼                                    │
          ┌──────────────────────────┐  S150    ┌─────────────────────────┐  S180
          │ Generate three-dimensional│          │  Adjust stereoscopic    │
          │ image                     │          │  effect                 │
          └──────────────┬───────────┘           └───────────┬─────────────┘
                         │                                    │
                         ▼                                    │
          ┌──────────────────────────┐  S160                  │
          │  Display three-dimensional│                        │
          │  image                    │                        │
          └──────────────┬───────────┘                        │
                         │   S170                              │
                         ▼                                     │
                  ◇──────────────◇        Yes                  │
                 ╱  Readjust       ╲──────────────────────────┘
                 ╲ stereoscopic effect?╱
                  ◇──────────────◇
                         │ No
                         ▼
          ┌──────────────────────────┐  S190
          │  Record three-dimensional │
          │  image                    │
          └──────────────┬───────────┘
                         │
                         ▼
                    ┌──────────┐
                    │   End    │
                    └──────────┘
```

FIG. 16

Three-dimensional image capturing apparatus 300

Capturing unit 130

Object designating unit 110

Resolution setting unit 120

Depth map generating unit 140

Cost function holding unit 150

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1587329 A

- JP 2001333324 A